# EUROPÄISCHE PATENTSCHRIFT

(11) **EP 3 409 419 B1**
(45) Veröffentlichungstag und Bekanntmachung des Hinweises auf die Patenterteilung: **30.03.2022**
(21) Anmeldenummer: 18177563.6
(22) Anmeldetag: 19.12.2014
(51) Int. Cl.: B24B 41/00, B24B 49/12, B24B 9/14, B24B 13/005, B24B 27/00, B23Q 7/04, B23Q 17/20

(54) **VERFAHREN UND VORRICHTUNG ZUM RANDBEARBEITEN EINER OPTISCHEN LINSE**
METHOD AND DEVICE FOR MACHINING THE EDGE OF AN OPTICAL LENS
PROCÉDÉ ET DISPOSITIF D'USINAGE DES BORDS D'UNE LENTILLE OPTIQUE

(43) Veröffentlichungstag der Anmeldung: 05.12.2018
(62) Teilanmeldung aus: 14828014.2
(73) Patentinhaber: Schneider GmbH & Co. KG, 35112 Fronhausen (DE)
(72) Erfinder: Gerrath, Torsten, 35037 Marburg (DE); Huttenhuis, Stephan, 35096 Weimar-Niederweimar (DE); Schneider, Gunter, 35037 Marburg (DE); Schneider, Benjamin, 35102 Lohra (DE)
(74) Vertreter: Von Rohr Patentanwälte Partnerschaft mbB

(56) Entgegenhaltungen:
- EP-A1- 0 990 484
- DE-U1- 20 022 169
- US-A1- 2007 264 915

## Beschreibung

Die vorliegende Erfindung betrifft ein Verfahren zum Randbearbeiten einer optischen Linse gemäß dem Oberbegriff des Anspruchs 1 sowie eine Vorrichtung zur Randbearbeitung einer optischen Linse gemäß dem Oberbegriff des Anspruchs 8.

Eine optische Linse, beispielsweise für eine Brille, soll bestimmte optische Eigenschaften aufweisen. Die damit einhergehenden gewünschten optischen Daten der Linse werden beispielsweise von einem Augenoptiker bestimmt. Die Linsen werden dann in Abhängigkeit von den jeweils gewünschten optischen Daten bearbeitet bzw. gefertigt, wobei die Linsen insbesondere an das jeweilige Brillengestell angepasst werden müssen.

Die vorliegende Erfindung befasst sich besonders bevorzugt mit der Randbearbeitung einer optischen Linse zur Anpassung an ein Brillengestell.

Die EP 0 990 484 A1 offenbart eine Anlage zur Randbearbeitung von Linsen mit einem Bandförderer, einer Ladeeinrichtung, einer Messeinrichtung und einer Bearbeitungseinrichtung. Die Ladeeinrichtung greift eine zu bearbeitende Linse mittels eines Ladearms mit drei Saugern und führt die Linse zunächst der Messeinrichtung zu. Dort wird die Linse weiterhin von der Ladeeinrichtung gehalten und gemessen. Anschließend wird die Linse direkt an die Bearbeitungseinrichtung übergeben, wo die Linse zunächst auf einer unteren Einspannwelle abgelegt und schließlich mittels einer oberen Einspannhülle als Gegenlager für die Bearbeitung eingespannt wird. Nach der Bearbeitung erfasst die Ladeeinrichtung die bearbeitete Linse mittels eines anderen Saugers an einem Entladearm, um durch Schwenken die Bearbeitungseinrichtung mit der nächsten zu bearbeitenden Linse zu beladen. Die bekannte Anlage ist hinsichtlich des Ablaufs und einer genauen Bearbeitung bei hohem Durchsatz nicht optimiert.

Die EP 1 524 073 A2 offenbart eine Anlage zur Randbearbeitung von Brillengläsern, wobei rechts und links neben einem zentralen Bandförderer auf jeder Seite außen eine Messeinrichtung und zwischen Messeinrichtung und Bandförderer eine Bearbeitungseinrichtung angeordnet ist. Die Handhabung der Linse erfolgt über eine Ladeeinrichtung, die die Linsen abwechselnd und je nach Bedarf mittels entsprechender Greifer bzw. Sauger den einzelnen Einrichtungen auf beiden Seiten zuführt. Die bekannte Anlage ist hinsichtlich des Ablaufs und einer genauen Bearbeitung bei hohem Durchsatz nicht optimiert.

Die US 2007/0264915 A1, auf der die Oberbegriffe der Ansprüche 1 und 8 basieren, betrifft eine Vorrichtung zum Bearbeiten von optischen Linsen. Die Vorrichtung weist eine Messeinrichtung zum Messen der Linsen und eine Bearbeitungseinrichtung zum Bearbeiten der Linsen auf. Mittels einem ersten Transfermittel können die Linsen nach einem Messen an ein weiteres Transfermittel übergeben werden, welches die Linsen an die Bearbeitungseinrichtung übergibt.

Der vorliegenden Erfindung liegt die Aufgabe zugrunde, ein Verfahren und eine Vorrichtung zum Bearbeiten, insbesondere Randbearbeiten, einer optischen Linse anzugeben, wobei ein kompakter Aufbau, ein optimaler Ablauf, eine genaue Bearbeitung, also eine Minimierung von Fehlern, und/oder ein hoher Durchsatz ermöglicht oder erleichtert wird bzw. werden.

Die obige Aufgabe wird durch ein Verfahren gemäß Anspruch 1 oder durch eine Vorrichtung gemäß Anspruch 8 gelöst. Vorteilhafte Weiterbildungen sind Gegenstand der Unteransprüche.

Die vorliegende Erfindung betrifft ein Verfahren zum Bearbeiten, insbesondere Randbearbeiten, einer optischen Linse, wobei die Linse - insbesondere in einer Vorrichtung mit einer Messeinrichtung und einer Bearbeitungseinrichtung - sowohl gemessen als auch bearbeitet wird.

Gemäß einem besonders bevorzugten Aspekt der vorliegenden Erfindung zeichnet sich ein vorschlagsgemäßes Verfahren insbesondere dadurch aus, dass ein Punkt, insbesondere ein optischer Referenzpunkt, auf der Linse mittels einer optischen Messung bestimmt wird, die Linse an dem bestimmten Punkt erfasst bzw. gehalten und die Linse anschließend in einer gewünschten Horizontallage bzw. Kipplage insbesondere für eine weitere Messung oder eine nachfolgende Bearbeitung ausgerichtet wird. Dies ist einem besonders genauen Messen und Bestimmen von Punkten sowie einem besonders genauen Halten der Linse und damit einer besonders genauen Bearbeitung zuträglich.

Besonders bevorzugt erfolgt das Ausrichten der Linse in eine gewünschten Horizontallage bzw. Kipplage dadurch, dass die Tangentialebene an dem Punkt, an dem die Linse gehalten wird, entsprechend ausgerichtet wird, beispielsweise senkrecht zu einer Mess- oder Zentrierachse oder Drehachse oder dergleichen. Insbesondere können so Parallaxenfehler beim Messen minimiert werden.

Gemäß einem weiteren Aspekt der vorliegenden Erfindung zeichnet sich ein vorschlagsgemäßes Verfahren insbesondere dadurch aus, dass in einem ersten Messen der optische Referenzpunkt der Linse approximativ bestimmt wird, dann die Linse im so bestimmten optischen Referenzpunkt - insbesondere in ihrer Kipplage und/oder in einer optischen Achse einer Messeinrichtung - ausgerichtet wird und anschließend in einem zweiten Messen der optische Referenzpunkt genau bzw. genauer als beim ersten Messen bestimmt wird. Vorzugsweise wird dann der Blockpunkt der Linse für die Bearbeitungseinrichtung bestimmt bzw. berechnet. Dies gestattet ein besonders genaues Bestimmen des Blockpunkts und dementsprechend eine besonders genaue Bearbeitung.

Gemäß einem anderen Aspekt der vorliegenden Erfindung zeichnet sich ein vorschlagsgemäßes Verfahren insbesondere dadurch aus, dass die Linse nach dem Messen an einen Zwischenförderer übergeben wird, der die Bearbeitungseinrichtung mit der Linse bzw. jeweils zwei Linsen belädt und entlädt und der erfindungsgemäß unabhängig von einer vorgeordneten Ladeeinrichtung und einer nachgeordneten Ladeeinrichtung arbeitet. Dies gestattet einen optimierten Ablauf, insbesondere da ein Umgreifen an der Linse minimiert werden kann und bei einem hohen Durchsatz mit hochgenauer Messung der bauliche Aufwand verhältnismäßig gering gehalten werden kann.

Vorzugsweise wird die Linse nach der - vorzugsweise approximativen - Bestimmung des optischen Referenzpunkts mittels der Messeinrichtung von der Ladeeinrichtung bzw. einem zweiten Sauger bzw. Greifer im optischen Referenzpunkt gegriffen bzw. gehalten und in einer gewünschten Horizontallage bzw. Kipplage ausgerichtet, besonders bevorzugt so, dass die Tangentialebene am optischen Referenzpunkt senkrecht zur optischen Achse der Messeinrichtung für ein genaueres Messen des optischen Referenzpunktes verläuft. Anschließend kann die Bestimmung bzw. Berechnung des gewünschten bzw. idealen Blockpunkts, insbesondere unter Berücksichtigung der Form und Lage der Linse nach der Randbearbeitung und/oder unter Berücksichtigung von Eigenschaften der Bearbeitungseinrichtung, erfolgen.

Besonders bevorzugt wird die Linse nach der Bestimmung des optischen Referenzpunkts mittels der Messeinrichtung am berechneten Blockpunkt vorzugsweise mittels eines zweiten Saugers erfasst und in einer gewünschten Horizontallage bzw. Kipplage ausgerichtet, besonders bevorzugt derart, dass die Tangentialebene am Blockpunkt senkrecht zu der Drehachse der Linse bei der späteren Bearbeitung verläuft. Diese Ausrichtung erfolgt vorzugsweise mit Hilfe des zweiten Saugers bzw. der Ladeeinrichtung.

Weiter betrifft die vorliegende Erfindung auch eine Vorrichtung zur Bearbeitung, insbesondere Randbearbeitung, einer optischen Linse. Die vorschlagsgemäße Vorrichtung weist eine Messeinrichtung für die Linse, eine Bearbeitungseinrichtung und eine Ladeeinrichtung auf. Die eigentliche Bearbeitung, insbesondere eine blocklose Randbearbeitung, erfolgt in der Bearbeitungseinrichtung. Die Messeinrichtung dient insbesondere der Bestimmung bzw. Messung eines optischen Referenzpunkts der Linse, wie einer optischen Mitte, eines Prismenreferenzpunkts o. dgl., und der Bestimmung bzw. Berechnung eines Blockpunkts. Ein solcher Blockpunkt liegt vorzugsweise näher im Bereich einer geometrischen Mitte der fertig bearbeiteten Linse, hängt also insbesondere auch von dem jeweiligen Brillengestell und/oder der Physiognomie des Trägers/Nutzers ab, an das bzw. die die Linse durch die vorzugsweise Randbearbeitung angepasst wird.

Gemäß einem bevorzugten Aspekt der vorliegenden Erfindung ist die Ladeeinrichtung vorzugsweise zwischen der Messeinrichtung und der Bearbeitungseinrichtung angeordnet oder dort schwenkgelagert. Dies ist einem kompakten Aufbau zuträglich, wobei eine schnelle Handhabung der Linse durch die Ladeeinrichtung mit möglichst kurzen Verfahrwegen und dadurch ein hoher Durchsatz ermöglicht werden.

Gemäß einem anderen Aspekt der vorliegenden Erfindung ist die Ladeeinrichtung vorzugsweise zum Halten bzw. Greifen der Linse und anschließenden Ausrichten in einer gewünschten Horizontallage bzw. Kipplage ausgebildet, um den optischen Referenzpunkt und den Blockpunkt zu bestimmen. Dies ermöglicht ein besonders genaues Messen bzw. Bestimmen des optischen Referenzpunkts sowie des Blockpunkts und damit eine besonders genaue Bearbeitung der Linse.

Gemäß einem weiteren Aspekt der vorliegenden Erfindung ist die Ladeeinrichtung vorzugsweise zum Halten und insbesondere Ausrichten der Linse in einem mittels der Messeinrichtung bestimmten Punkt, insbesondere in einem so bestimmten optischen Referenzpunkt, und zum anschließenden Ausrichten der Linse in einer gewünschten Horizontallage bzw. Kipplage ausgebildet. Dies ist einem besonders präzisen Messen und Bestimmen von Punkten und damit auch einer besonders genauen Bearbeitung zuträglich.

Gemäß einem weiteren Aspekt der vorliegenden Erfindung ist die Ladeeinrichtung vorzugsweise zum Halten und insbesondere Ausrichten der Linse in einem mittels der Messeinrichtung bestimmten optischen Referenzpunkt und anschließend in einem mittels der Messeinrichtung bestimmten Blockpunkt ausgebildet. Dementsprechend werden ein besonders präzises Messen und Halten der Linse und damit eine besonders genaue Bearbeitung ermöglicht.

Gemäß einem bevorzugten Aspekt der vorliegenden Erfindung ist die Vorrichtung vorzugsweise derart ausgebildet, dass die Linse der Messeinrichtung zugeführt, der optische Referenzpunkt der Linse - vorzugsweise iterativ - mittels der Messeinrichtung bestimmt und der Blockpunkt bestimmt bzw. berechnet wird, insbesondere wobei in einem ersten Messen der optische Referenzpunkt der Linse - vorzugsweise approximativ - bestimmt wird, die Linse dann insbesondere mittels der Ladeeinrichtung im bestimmten optischen Referenzpunkt ausgerichtet wird und in einem zweiten Messen der optische Referenzpunkt der Linse - insbesondere in der ausgerichteten Kipplage bzw. Horizontallage der Linse - genau bzw. genauer bestimmt wird. Dies ist einer hoch genauen Handhabung, Messung und Bearbeitung zuträglich, insbesondere da so der ideale Blockpunkt besonders genau bestimmt bzw. berechnet und/oder die Linse möglichst genau - also unter Minimierung von Messfehlern - an dem idealen Blockpunkt für die Bearbeitung der Linse gegriffen bzw. eingespannt werden kann.

Gemäß einem anderen Aspekt der vorliegenden Erfindung weist die Vorrichtung vorzugsweise eine unabhängig von der Ladeeinrichtung arbeitende Entladeeinrichtung zur Entnahme bzw. Ablage einer bearbeiteten Linse auf. Dies ist einem schnellen und optimierten Ablauf zuträglich, insbesondere um die Ladeeinrichtung für verschiedene Haltevorgänge beim Messen einsetzen zu können und gleichzeitig eine hohe Taktzahl bzw. einen hohen Durchsatz zu ermöglichen. Dementsprechend ist auch dieser Aspekt einer genauen Bearbeitung und einem schnellen Ablauf zuträglich.

Alternativ kann die Ladeeinrichtung auch die Funktion der Entladeeinrichtung übernehmen bzw. diese bilden. Die Entladeeinrichtung kann also auch entfallen.

Vorzugsweise weist die Vorrichtung oder Bearbeitungseinrichtung gemäß einem weiteren Aspekt der vorliegenden Erfindung zusätzlich zur Ladeeinrichtung und insbesondere zusätzlich zur Entladeeinrichtung einen Zwischenförderer zur Aufnahme von zu bearbeitenden Linsen von der Ladeeinrichtung und Zuführung zu der Bearbeitungseinrichtung sowie zur Entnahme von bearbeiteten Linsen von der Bearbeitungseinrichtung auf. Dies ermöglicht einen optimierten Lade- und Entladevorgang, insbesondere da ein Umgreifvorgang sowohl bei der Ladeeinrichtung als auch bei der Entladeeinrichtung entfallen bzw. sowohl für das Laden als auch für das Entlasten genutzt werden kann. Dies ist einem optimalen Ablauf und Aufbau und/oder einer definierten bzw. hochgenauen Übergabe zuträglich, insbesondere wenn der Zwischenförderer für eine Linse nur eine Bewegungsachse hat.

Alternativ kann der Zwischenförderer auch entfallen und die Ladeeinrichtung die Bearbeitungseinrichtung direkt mit Linsen beladen bzw. diese dann entladen. Entsprechend kann die Entladeeinrichtung, sofern vorhanden, bei Entfall des Zwischenförderers die Bearbeitungseinrichtung direkt entladen, also bearbeitete Linsen von dieser abnehmen bzw. wegfördern.

Es ist anzumerken, dass bei der vorliegenden Erfindung vorzugsweise blocklos gearbeitet wird. Es wird also kein sogenanntes Blockstück an der zu bearbeitenden Linse befestigt. Trotzdem wird der Begriff "Blockpunkt" zur Bezeichnung des Referenzpunkts für die Einspannung bei der Bearbeitung verwendet.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine schematische Seitenansicht einer vorschlagsgemäßen Vorrichtung;
- Fig. 2: eine schematische Draufsicht der Vorrichtung;
- Fig. 3: einen schematischen Schnitt der Vorrichtung;
- Fig. 4: eine schematische Draufsicht einer Linse und einer gewünschten Linsenform;
- Fig. 5: einen schematischen Schnitt der Linse gemäß Fig. 4 in der Ebene V-V;
- Fig. 6: einen schematischen Schnitt der Linse gemäß Fig. 4 in der Ebene VI-VI;
- Fig. 7: eine schematische Darstellung eines Greifens der Linse in einem optischen Referenzpunkt;
- Fig. 8: eine schematische Darstellung eines Greifens der Linse in einem Blockpunkt; und
- Fig. 9: eine schematische Darstellung entsprechend Fig. 8, wobei die Linse mit ihrer Tangentialebene am Blockpunkt horizontal ausgerichtet ist.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

Gegenstand der Erfindung sind eine Vorrichtung 1 und ein Verfahren zur Bearbeitung, insbesondere Randbearbeitung, einer optischen Linse 2, insbesondere zur Anpassung der Linse 2 an ein nicht dargestelltes Brillengestell.

Die Linse 2 besteht vorzugsweise aus Kunststoff. Jedoch kann grundsätzlich auch ein sonstiger in geeigneter Weise zu bearbeitender Werkstoff, ggf. auch Glas bzw. Mineralglas, verwendet werden. Wenn die fertige Linse 2 für eine Brille (nicht dargestellt) eingesetzt bzw. verwendet werden soll, was vorzugsweise der Fall ist, wird die Linse 2 auch als Brillenglas bezeichnet, selbst wenn die Linse 2 gegebenenfalls nicht aus Glas besteht.

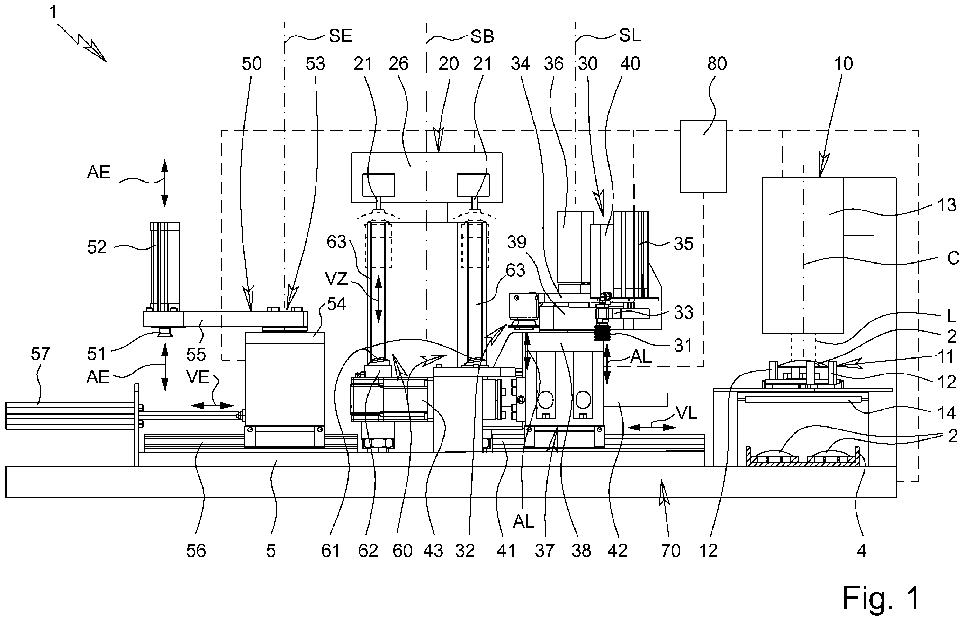

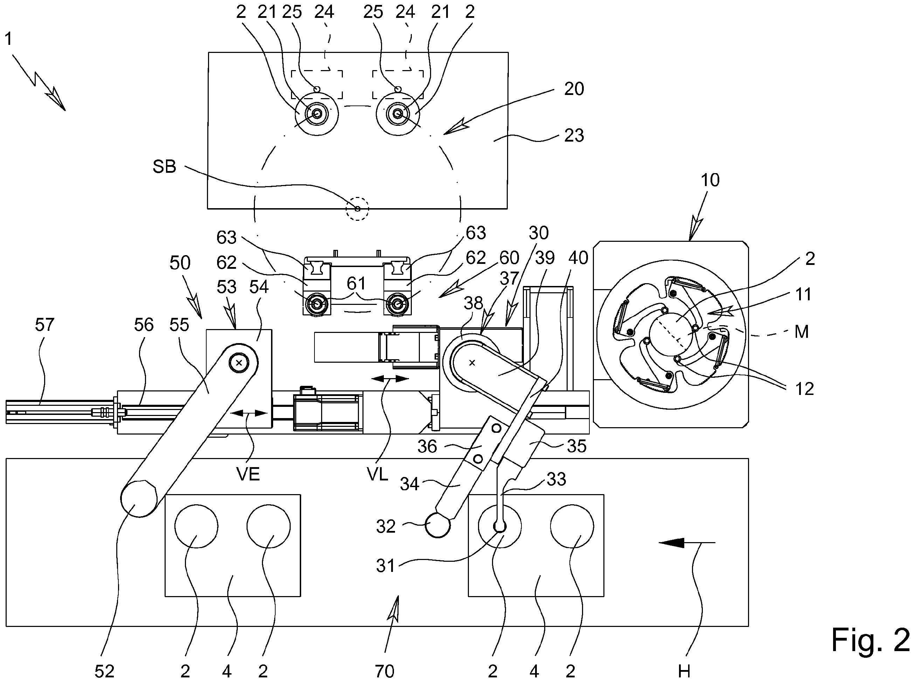

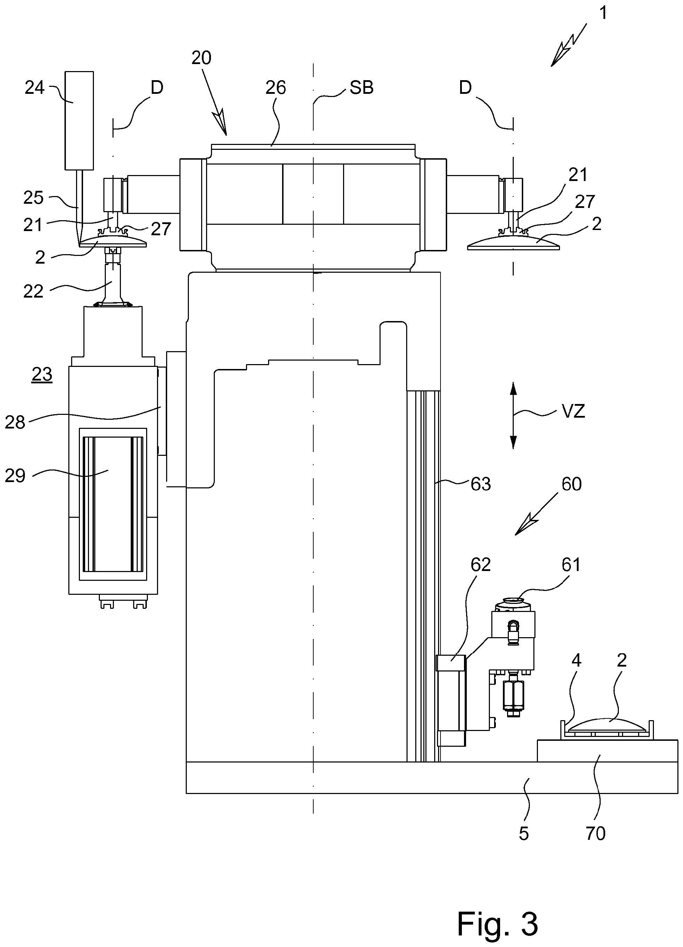

Fig. 1 zeigt ein bevorzugtes Ausführungsbeispiel der vorschlagsgemäßen Vorrichtung 1 in einer schematischen Seitenansicht. Fig. 2 zeigt die Vorrichtung 1 in einer schematischen Draufsicht. Fig. 3 zeigt die Vorrichtung 1 in einem schematischen, sehr vereinfachten Schnitt.

Die Vorrichtung 1 weist eine Messeinrichtung 10, eine Bearbeitungseinrichtung 20 und eine Ladeeinrichtung 30 sowie vorzugsweise eine Entladeeinrichtung 50, einen Zwischenförderer 60, einen Linsenförderer 70 und/oder eine Steuereinrichtung 80 auf.

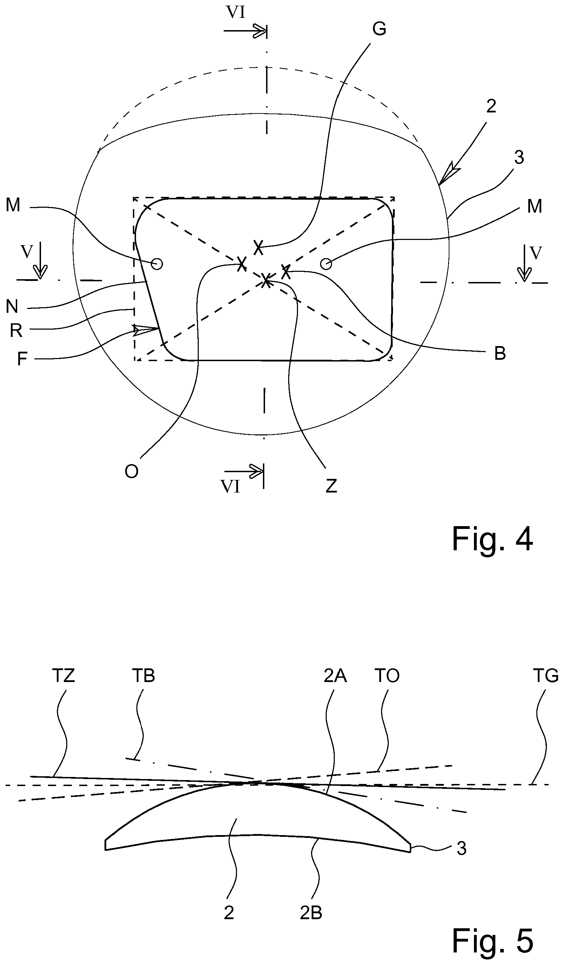

Die Messeinrichtung 10 dient einem optischen Messen der zu bearbeitenden Linse 2. Vorzugsweise dient die Messeinrichtung 10 der Bestimmung, insbesondere der Messung und/oder Berechnung, eines optischen Referenzpunkts O, eines Blockpunkts B und/oder einer Orientierung (Drehlage) der Linse 2, wie in Fig. 4 schematisch angedeutet.

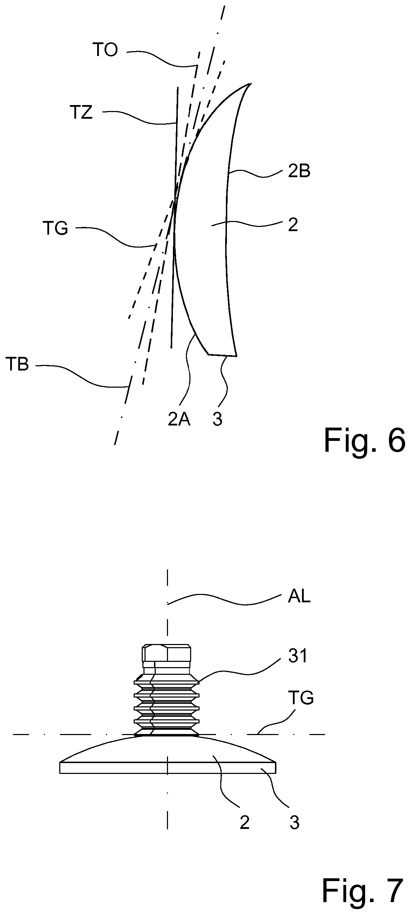

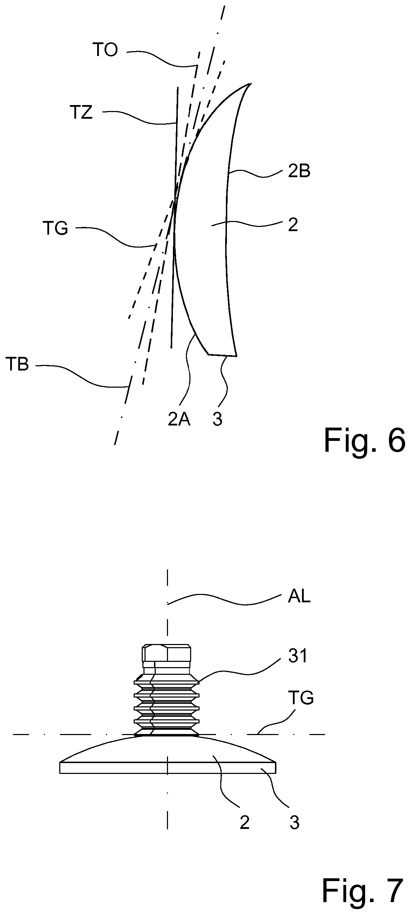

Fig. 4 zeigt in einer schematischen Draufsicht eine zu bearbeitende Linse 2 bzw. einen Linsenrohling. Fig. 5 zeigt in einem nur schematischen Schnitt entlang Linie V-V von Fig. 4 den Linsenrohling bzw. die Linse 2 vor der Randbearbeitung, wobei verschiedene Tangentialebenen T auf der Vorderseite 2A der Linse 2 angedeutet sind. Fig. 6 zeigt einen zu Fig. 5 entsprechenden schematischen Schnitt entlang Linie VI-VI von Fig. 4.

Vorzugsweise ist die zu bearbeitende Linse 2 bzw. ein Linsenrohling zumindest im Wesentlichen kreisförmig bzw. weist die zu bearbeitende Linse 2 bzw. der Linsenrohling eine zumindest im Wesentlichen kreisförmige Außenkontur auf. Insbesondere ist ein zu bearbeitender Rand 3 der Linse 2 zumindest im Wesentlichen kreisförmig. Es ist sind jedoch auch andere Geometrien bzw. Außenkonturen möglich. Die in Fig. 4 dargestellte Linse 2 weist eine von der Kreisform abweichende Außenkontur bzw. einen von der Kreisform abweichenden Rand 3 auf. Durch Strichlinien ist die Kreisform angedeutet.

Beim Darstellungsbeispiel weicht der Linsenrohling bzw. die nicht bearbeitete Linse 2 von der gestrichelt dargestellten Kreisform insbesondere aufgrund ihrer beispielhaften teilweisen randscharfen Ausbildung im oberen Randbereich ab.

Vorzugsweise bezieht sich die in Fig. 4 angedeutete geometrische Mitte G der Linse 2 auf eine kreisförmige Linse 2 bzw. auf einen kreisförmigen Rand 3. Insbesondere ist die geometrische Mitte G der Linse 2 diejenige Mitte der Linse 2, die sich bei Annahme einer zumindest im Wesentlichen kreisförmigen Geometrie der Linse 2 bzw. eines kreisförmigen Randes 3 ergeben würde, auch wenn die Linse 2 keine Kreisform aufweist. Folglich kann die geometrische Mitte G vom tatsächlichen Mittelpunkt und/oder Schwerpunkt abweichen.

In Fig. 4 ist eine Form F der Linse 2 angedeutet, die die zu bearbeitende Linse 2 bzw. der Linsenrohling nach der Bearbeitung erhalten soll, um in ein zugeordnetes (nicht dargestelltes) Brillengestell zu passen bzw. aufgenommen zu werden. Diese Form F wird durch entsprechende Bearbeitung bzw. Randbearbeitung der Linse 2 in der Bearbeitungseinrichtung 20 erreicht bzw. hergestellt. Dies erfolgt insbesondere durch entsprechendes Abarbeiten bzw. Entfernen von Bereichen des Rands 3 der Linse 2, besonders bevorzugt durch spanabhebende Bearbeitung bzw. Schleifen, Fräsen, Drehen und/oder auf sonstige geeignete Weise.

Die Lage der Form F der bearbeiteten Linse 2 hängt vom optischen Referenzpunkt, der insbesondere als "optische Achse" der Linse 2 verstanden werden kann, ab. Der optische Referenzpunkt O soll nämlich üblicherweise eine bestimmte Lage in der fertig bearbeiteten Linse 2 haben, um für den Nutzer bzw. Brillenträger die richtige Lage der Linse 2 im Brillengestell und damit relativ zum Auge des Nutzers erreichen zu können.

Dementsprechend ist es zunächst wichtig, den optischen Referenzpunkt O und insbesondere auch die damit einhergehende Drehlage der Linse 2 bzw. des Linsenrohlings bei rotationsasymmetrischen Linsen 2 - hier mittels der Messeinrichtung 10 - zu bestimmen, um dann in Abhängigkeit davon die Lage der Form F der fertig bearbeiteten Linse 2, die insbesondere auch vom jeweiligen Brillengestell abhängt, im Linsenrohling für die nachfolgende Randbearbeitung - hier in der Bearbeitungseinrichtung 20 - festlegen zu können.

Bei der Randbearbeitung bzw. Randbearbeitung wird der Linsenrohling an dem Blockpunkt B eingespannt. Dieser wird insbesondere in Abhängigkeit von der Lage der Linsenform F - ggf. auch unter Berücksichtigung sonstiger Aspekte, wie gewünschter oder erforderlicher Cut-Outs, Bohrungen o. dgl. - bestimmt bzw. berechnet oder festgelegt. Dies erfolgt insbesondere mittels der Messeinrichtung 10, der Steuereinrichtung 80 und/oder unter Berücksichtigung manueller oder sonstiger Eingaben oder Vorgaben, wie der Größe und/oder Form von Anlagenelementen, die die Linse 2 bzw. den Linsenrohling für die Bearbeitung einspannen.

Vorzugsweise weist die Linse 2 ein Rahmenzentrum Z auf. Das Rahmenzentrum Z entspricht vorzugsweise zumindest im Wesentlichen einer geometrischen Mitte der gewünschten Linsenform F bzw. eines - theoretischen bzw. üblicherweise rechteckig angenommenen - Rahmens R, der die Form F der Linse 2 umrahmt bzw. umfasst, wie in Fig. 4 durch Strichlinien veranschaulicht. Das Rahmenzentrum Z kann einer Mitte der Form F entsprechen oder diese approximieren.

Die dargestellte Form F weist beispielsweise eine Aussparung an der dem Nasenrücken eines Nutzer (nicht dargestellt) zugewandten Seite bzw. Nasalseite N auf, so dass das Rahmenzentrum Z ggf. von der Mitte der Form F abweicht.

Der Blockpunkt B kann mit dem Rahmenzentrum Z übereinstimmen oder, insbesondere unter Berücksichtigung von Aussparungen oder Cut-Outs, wie für die Nasalseite N, Bohrungen o. dgl. davon abweichen. Grundsätzlich ist es auch möglich, dass der Blockpunkt B dem optischen Referenzpunkt O oder der geometrischen Mitte G der Linse 2 bzw. des Linsenrohlings entspricht.

Vorzugsweise wird der Blockpunkt B unter Berücksichtigung des Rahmenzentrums Z, der Kontur bzw. der Größe und der Lage der gewünschten Linsenform F und/oder von Bohrungen, Cut-Outs, o. dgl. und vorzugsweise unter Berücksichtigung von Erfordernissen der Bearbeitungseinrichtung 20, wie der Größe und/oder Form von Einspannelementen zum Halten der Linse 2, bzw. von Erfordernissen der Bearbeitung festgelegt bzw. bestimmt, um insbesondere ein möglichst zentrales Einspannen für die Bearbeitung zu ermöglichen und/oder bei der Bearbeitung auftretende, in der Linsenebene wirkende Momente zu minimieren.

In Fig. 4 ist ferner der optische Referenzpunkt O angedeutet, der der optischen Achse der Linse 2, insbesondere auf einer Flachseite, insbesondere der Vorderseite 2A, der Linse 2 entspricht. Hierbei ist zu beachten, dass der optische Referenzpunkt O von der geometrischen Mitte G der zu bearbeitenden Linse 2 differieren kann.

Der optische Referenzpunkt O hängt insbesondere davon ab, um welchen Typ bzw. welche Art von Linse 2 es sich handelt. Dies kann dann auch entsprechend Auswirkung auf das Messen in der Messeinrichtung 10 bzw. das Bestimmen des optischen Referenzpunkts O haben. Beispielsweise hängt die Lage des optischen Referenzpunkts O bzw. dessen Bestimmung davon ab, ob es sich um eine rotationssymmetrische bzw. Single-Vision-Linse 2, eine bifokale Linse 2, eine progressive Linse 2, eine sogenannte Freiform-Linse 2 oder dergleichen handelt.

Beispielsweise kann bei einer Single-Vision-Linse oder Bifokal-Linse mittels einer optischen Projektion in der Messeinrichtung 10 der optische Referenzpunkt O bestimmt werden, um insbesondere bei nicht rotatorischen bzw. rotationsasymmetrischen Linsen 2 deren Drehlage zu bestimmen.

Bei einer progressiven Linse oder Freiform-Linse werden oftmals Markierungen M, wie in Fig. 4 angedeutet, eingesetzt, die beispielsweise einen vorbestimmten Abstand, üblicherweise von 34 mm, und üblicherweise eine vorbestimmte Form, beispielsweise hier eine Kreisform, aufweisen, um den optischen Referenzpunkt O - hier insbesondere als geometrische Mitte zwischen den beiden Markierungen M - festzulegen und insbesondere auch die Drehlage der Linse 2 - hier insbesondere durch die Verbindungslinie der beiden Markierungen M - anzugeben.

Die Genauigkeit der Bestimmung des optischen Referenzpunkts O hängt insbesondere von der Zentrierung der Linse 2 bzw. des Linsenrohlings bei der Messung bzw. in der Messeinrichtung 10 und/oder der Ausrichtung der Kipplage der Linse 2 bei der Messung bzw. in der Messeinrichtung 10 ab. Insbesondere kann die Messung bzw. Bestimmung des optischen Referenzpunkt O ungenau werden, wenn die Linse 2 bezüglich der optischen Messachse oder Zentralachse C (siehe Fig. 1) der Messeinrichtung 10 schlecht zentriert und/oder verkippt ist.

Im dargestellten Beispiel sind die geometrische Mitte G, das Rahmenzentrum Z der optische Referenzpunkt O und/oder der Blockpunkt B zueinander beabstandet bzw. verschieden. Fig. 5 und 6 veranschaulichen, dass durch die Geometrie bzw. Oberflächenkrümmung der Linse 2, insbesondere der Vorderseite 2A, auch die jeweils zugeordneten Tangentialebenen TG, TB, TZ und TO unterschiedlich zueinander geneigt sind. Die Tangentialebene TG ist diejenige Ebene, die tangential an der geometrischen Mitte G anliegt, die Tangentialebene TB ist diejenige Ebene, die tangential am Blockpunkt B anliegt, die Tangentialebene TZ ist diejenige Ebene, die tangential am Rahmenzentrum Z anliegt und die Tangentialebene TO ist diejenige Ebene, die tangential am optischen Referenzpunkt O anliegt.

Die Bestimmung des gewünschten Blockpunkts B erfolgt vorzugsweise mittels der Messeinrichtung 10 und/oder der Steuereinrichtung 80.

Die Vorrichtung 1 bzw. Messeinrichtung 10 dient vorzugsweise der Bestimmung der Orientierung bzw. Drehlage und/oder der Geometrie, insbesondere der Kontur bzw. des Rands 3, der Linse 2. Dies erfolgt insbesondere durch Erfassung einer oder mehrerer Markierungen M, wie in Fig. 4 beispielhaft angedeutet. Besonders bevorzugt dienen diese Markierungen M, soweit vorhanden, auch der Bestimmung des optischen Referenzpunkts O, wie bereits erläutert.

Die Messeinrichtung 10 weist vorzugsweise eine Halteeinrichtung, insbesondere einen Greifer 11, zum Halten der Linse 2 beim Messen auf. Beim Darstellungsbeispiel weist die Halteeinrichtung bzw. der Greifer 11 vorzugsweise seitlich an die Linse 2 - insbesondere durch Federkraft - anlegbare Haltefinger 12 auf, wie in Fig. 1 und 2 angedeutet. Jedoch sind auch andere konstruktive Lösungen möglich.

Die Messeinrichtung 10 weist vorzugsweise ein Messgerät 13 zum optischen Messen bzw. Vermessen der Linse 2 und optimal eine Lichtquelle 14 zum Beleuchten der Linse 2 auf. Besonders bevorzugt hält die Halteeinrichtung bzw. der Greifer 11 die Linse 2 zwischen der Lichtquelle 14 und dem Messgerät 13 zum Messen bzw. während des Messens. Das Messen kann insbesondere basierend auf Projektion, Transmission und/oder Reflektion mit Hilfe von Licht, wie sichtbarem Licht, LaserLicht, UV-Licht oder dergleichen, erfolgen.

Die Bearbeitungseinrichtung 20 dient der Bearbeitung, insbesondere Randbearbeitung, der Linse 2. Insbesondere ist die Bearbeitungseinrichtung 20 zur gleichzeitigen Bearbeitung von zwei Linsen 2, vorzugsweise einer rechten und linken Linse 2 für ein nicht dargestelltes Brillengestell, ausgebildet.

Nachfolgend wird primär die Bearbeitung einer Linse 2 erläutert, auch wenn - wie gesagt - vorzugsweise eine simultane und unabhängig voneinander ablaufende Bearbeitung von zwei Linsen 2 erfolgt bzw. möglich ist.

Die Bearbeitung erfolgt formgebend, insbesondere zur Erzielung der gewünschten Form F der Linse 2, wie in Fig. 4 angedeutet.

Vorzugsweise gestattet die Bearbeitungseinrichtung 20 auch eine gewünschte Bearbeitung eines Randes 3 der Linse 2, insbesondere nach Bedarf die Bildung von Fasen, Rillen und/oder dergleichen.

Die Bearbeitungseinrichtung 20 ist vorzugsweise zum blocklosen Bearbeiten der Linse 2 ausgebildet. Insbesondere wird kein sogenanntes Blockstück - also kein Halter - an der Linse 2 temporär angeklebt oder auf sonstige Weise stoffschlüssig angebracht. Stattdessen wird die Linse 2 zur Bearbeitung vorzugsweise eingespannt.

Die Bearbeitungseinrichtung 20 weist vorzugsweise eine obere Einspannwelle 21 und untere Einspannwelle 22 auf, um dazwischen die zu bearbeitende Linse 2 einzuspannen, wie in Fig. 3 angedeutet.

Beim Darstellungsbeispiel ist die Bearbeitungseinrichtung 20 zur gleichzeitigen Bearbeitung von zwei Linsen 2 ausgebildet. Dementsprechend weist die Bearbeitungseinrichtung 20 hier vorzugsweise zwei obere bzw. ein Paar von oberen Einspannwellen 21 und zwei untere bzw. ein Paar von unteren Einspannwellen 22 zum gleichzeitigen Einspannen von zwei Linsen 2 auf. Fig. 3 zeigt jedoch nur die Bearbeitung einer Linse 2.

Die Bearbeitung erfolgt vorzugsweise in einem Arbeitsraum 23 der Bearbeitungseinrichtung 20, vorzugsweise wobei im Arbeitsraum 23 zwei obere Einspannwellen 21 und zwei untere Einspannwellen 22 angeordnet sind, um insbesondere zwei Linsen 2 gleichzeitig einspannen und bearbeiten zu können.

Die Bearbeitungseinrichtung 20 weist vorzugsweise einen Werkzeugantrieb 24 mit mindestens einem, vorzugsweise wechselbaren Werkzeug 25 zur Bearbeitung einer Linse 2 auf. Besonders bevorzugt weist die Bearbeitungseinrichtung 20 zwei unabhängig voneinander arbeitende Werkezugantriebe 24 mit zugeordneten Werkzeugen 25 zur unabhängigen und gleichzeitigen Bearbeitung von zwei Linsen 2 auf. Fig. 3 zeigt eine bereits bearbeitete Linse 2 im Arbeitsraum 23 der Bearbeitungseinrichtung 20.

Vorzugsweise ist der Werkzeugantrieb 24 jeweils - insbesondere ausgehend vom Gestell 5 - über eine Horizontalachse, Vertikalachse und/oder eine vorzugsweise horizontale Schwenkachse - also mehrachsig bzw. dreiachsig - bewegbar, um die gewünschte Bearbeitung unter Berücksichtigung der Drehachse D der jeweiligen Linse 2 zu ermöglichen.

Die oberen Einspannwellen 21 sind vorzugsweise von einem schwenkbaren bzw. drehbaren Kopf- oder Lagerteil 26 gehalten, wobei das Lagerteil 26 um eine Schwenkachse SB schwenkbar bzw. drehbar ist, um zum Wechseln der Linse 2 die oberen Einspannwellen 21 aus dem Arbeitsraum 23 heraus und wieder hineinschwenken zu können.

Insbesondere bei einem Schwenken des Lagerteils 26 um 180° Grad aus der Arbeitsposition nehmen die oberen Einspannwellen 21 eine Wechselposition außerhalb des Arbeitsraums 23 ein, wie Fig. 1 bis 3 veranschaulichen.

Die Bearbeitungseinrichtung 20 bzw. das Lagerteil 26 weist vorzugsweise vier obere bzw. zwei Paare von oberen Einspannwellen 21 auf, die abwechselnd in den Arbeitsraum 23 schwenkbar sind, um jeweils eine Bearbeitung von jeweils zwei Linsen 2 zu ermöglichen, während das andere Paar von Einspannwellen 21 die bearbeiteten Linsen 2 abgeben und neue zu bearbeitende Linsen 2 aufnehmen kann, also parallel ein Entladen und Beladen erfolgen kann. Insbesondere ermöglicht die Bearbeitungseinrichtung 20 die gleichzeitige Handhabung von vier Linsen 2, vorzugsweise wobei zwei Linsen 2 - vorzugsweise gleichzeitig - bearbeitet werden und zwei Linsen 2 - vorzugsweise gleichzeitig - abgegeben und/oder aufgenommen werden können.

Die oberen Einspannwellen 21 sind jeweils um eine Drehachse D drehbar und vorzugsweise mit einem eigenen (nicht dargestellten) Drehantrieb versehen.

Die oberen Einspannwellen 21 sind vorzugsweise jeweils mit einem Halter, insbesondere Sauger 27, zur Halterung der zugeordneten Linse 2 versehen.

Die oberen und unteren Einspannwellen 21, 22 sind im Arbeitsraum 23 gegeneinander spannbar, um die jeweils zu bearbeitende Linse 2 dazwischen einzuspannen. Beim Darstellungsbeispiel sind vorzugsweise nur die unteren Einspannwellen 22 linear bzw. gegen die jeweils zugeordnete obere Einspannwelle 21 verschiebbar bzw. verfahrbar und wieder davon abrückbar. Beim Darstellungsbeispiel wird dies vorzugsweise durch entsprechende Schlittenführungen 28 realisiert. Jedoch sind auch andere konstruktive Lösungen möglich.

Die unteren Einspannwellen 22 sind im Arbeitsraum 23 jeweils koaxial zu einer zugeordneten oberen Einspannwelle 21 angeordnet und gemeinsam mit dieser für die entsprechende Bearbeitung der Linse 2 drehbar. Vorzugsweise sind die unteren Einspannwellen 22 hierzu über entsprechende Antriebe 29, insbesondere Drehantriebe, antreibbar, insbesondere synchron zu der jeweils zugeordneten oberen Einspannwelle 21.

Die Ladeeinrichtung 30 dient der Aufnahme einer zu bearbeitenden Linse 2 von dem Linsenförderer 70, insbesondere aus Behältnissen 4 mit den Linsen 2, und der Zuführung der zu bearbeitenden Linse(n) 2 zu der Messeinrichtung 10 und/oder Bearbeitungseinrichtung 20.

Die Ladeeinrichtung 30 weist einen ersten Greifer, insbesondere Sauger 31, und vorzugsweise auch einen zweiten Greifer, insbesondere Sauger 32, auf. Da die Greifer vorzugsweise als Sauger ausgebildet sind, wird nachfolgend immer von Saugern gesprochen. Die diesbezüglichen Ausführungen geltend jedoch entsprechend, falls stattdessen ein Greifer oder sonstiger Halter für den ersten und/oder zweiten Sauger 31, 32 eingesetzt wird.

Der erste Sauger 31 ist vorzugsweise an einem ersten Ladearm 33 und/oder ersten Linearantrieb, insbesondere Pneumatikzylinder 35, der Ladeeinrichtung 30 angeordnet bzw. davon gehalten.

Der zweite Sauger 32 ist vorzugsweise an einem zweiten Ladearm 34 und/oder zweiten Linearantrieb, insbesondere Pneumatikzylinder 36, der Ladeeinrichtung 30 angeordnet bzw. davon gehalten.

Die Ladeeinrichtung 30 weist vorzugsweise eine Schwenkeinrichtung 37 auf, die insbesondere die ersten und zweiten Sauger 31, 32 bzw. ersten und zweiten Ladearme 33, 34 bzw. ersten und zweiten Linearantriebe bzw. Pneumatikzylinder 35, 36 trägt, insbesondere verschwenkbar.

Die Schwenkeinrichtung 37 weist vorzugsweise einen Schwenkantrieb 38 und einen davon schwenkbaren Schwenkarm 39 auf. Jedoch sind auch andere konstruktive Lösungen möglich.

Beim Darstellungsbeispiel sind die Linearantriebe bzw. Pneumatikzylinder 35, 36 vorzugsweise über ein Halteelement 40 mit dem Schwenkarm 39 verbunden, wobei die Linearantriebe bzw. Pneumatikzylinder 35, 36 ihrerseits die Ladearme 33, 34 mit den Saugern 31, 32 tragen. Jedoch sind auch andere konstruktive Lösungen möglich.

Die Schwenkeinrichtung 37 bzw. der Schwenkantrieb 38 oder Schwenkarm 39 ist vorzugsweise linear bewegbar bzw. verschiebbar in eine Verschieberichtung VL, insbesondere mittels einer entsprechenden Schlittenführung 41 und/oder motorgetriebenen Gewindespindel 42 der Ladeeinrichtung 30. Vorzugsweise wird die Gewindespindel 42 von einem zugeordneten Motor 43 angetrieben. Jedoch kann auch ein sonstiger Stellantrieb zur gewünschten Linearbewegung in Verschieberichtung VL vorgesehen sein.

Vorzugsweise ist die Ladeeinrichtung 30 zwischen der Messeinrichtung 10 und der Bearbeitungsrichtung 20 angeordnet oder dort geschwenkt gelagert. Dies ist insbesondere einem sehr kompakten Aufbau und/oder geringen Verfahrwegen zuträglich.

Die Entladeeinrichtung 50 dient der Entnahme bzw. Ablage einer bearbeiteten Linse 2. Insbesondere legt die Entladeeinrichtung 50 die bearbeiteten Linsen 2 wieder in entsprechende Behältnisse 4 - insbesondere sogenannte "Trays" - nach der Bearbeitung ab. Die zu bearbeitenden Linsen 2 sind vorher den Behältnissen 4 - insbesondere mittels der Ladeeinrichtung 30 - entnommen worden.

Die Entladeeinrichtung 50 weist vorzugsweise einen Greifer, insbesondere Sauger 51, auf. Da zum Greifen bzw. Halten der bearbeiteten Linse 2 vorzugsweise ein Sauger eingesetzt wird, wird nachfolgend nur noch auf den Sauger 51 näher eingegangen. Jedoch kann es sich stattdessen auch um einen Greifer o. dgl. handeln, so dass in diesem Fall die nachfolgenden Ausführungen und Erläuterungen entsprechend gelten.

Der Sauger 51 ist vorzugsweise von einem Linearantrieb, insbesondere Pneumatikzylinder 52, linear verstellbar gehalten.

Die Entladeeinrichtung 50 weist vorzugsweise eine Schwenkeinrichtung 53, hier insbesondere mit einem Schwenkantrieb 54 und einem Schwenkarm 55 auf. Der Schwenkarm 55 trägt vorzugsweise den Sauger 51 bzw. Linearantrieb/Pneumatikzylinder 52. Jedoch sind auch andere konstruktive Lösungen möglich.

Die Schwenkeinrichtung 53 bzw. der Schwenkarm 55 oder Schwenkantrieb 54 ist vorzugweise linear bewegbar bzw. verschiebbar in eine Verschieberichtung VE, insbesondere mittels einer entsprechenden Schlittenführung 56 und/oder eines zugeordneten Stellantriebs 57. Jedoch sind auch andere konstruktive Lösungen möglich.

Besonders bevorzugt ist die Entladeeinrichtung 50 auf einer der Messeinrichtung 10 und/oder Ladeeinrichtung 30 abgewandten Seite der Bearbeitungseinrichtung 20 angeordnet oder dort geschwenkt gelagert. Die ist einem kompakten Aufbau und/oder kurzen Verfahrwegen zuträglich.

Besonders bevorzugt sind die Ladeeinrichtung 30 und die Entladeeinrichtung 50 auf der dem Arbeitsraum 23 abgewandten Seite und/oder auf der dem Linsenförderer 70 zugewandten Seite der Bearbeitungseinrichtung 20 angeordnet.

Besonders bevorzugt sind die Messeinrichtung 10, die Ladeeinrichtung 30, die Bearbeitungseinrichtung 20 und die Entladeeinrichtung 50 zumindest im Wesentlichen in einer Reihe bzw. hintereinander und/oder auf einer Seite neben dem Linsenförderer 70 angeordnet.

Der Zwischenförderer 60 dient vorzugsweise einer Aufnahme von zu bearbeitenden Linsen 2 von der Ladeeinrichtung 30 und Zuführung dieser Linsen 2 zu der Bearbeitungseinrichtung 20 sowie einer Entnahme von bearbeiteten Linsen 2 von der Bearbeitungseinrichtung 20 und Bereitstellung dieser Linsen 2 für die Entladeeinrichtung 50.

Beim Darstellungsbeispiel weist der Zwischenförderer 60 vorzugsweise einen Greifer, insbesondere Sauger 61, zum Greifen bzw. Halten der Linse 2, insbesondere an einer Rückseite 2B der Linse 2, und vorzugsweise einen Linearantrieb bzw. Schlitten 62 zum linearen Bewegen bzw. Verschieben des Greifers/Saugers 61 auf.

Besonders bevorzugt ist der Zwischenförderer 60 zur Aufnahme bzw. Entnahme und Bereitstellung bzw. Übergabe von Paaren von Linsen 2 ausgebildet. Dementsprechend weist der Zwischenförderer 60 beim Darstellungsbeispiel vorzugsweise zwei Sauger 61 an zugeordneten Schlitten 62 auf, die vorzugsweise parallel zueinander bewegbar sind.

Vorzugsweise sind die Schlitten 62 in zwei Schlittenführungen 63 mittels zugeordneter (nicht dargestellter) Antriebe und damit die Sauger 61 linear bewegbar bzw. verschiebbar in eine Verschieberichtung VZ, wie in Fig. 1 und 3 angedeutet.

Besonders bevorzugt sind die Sauger 61 mittels der Linearantriebe bzw. Schlitten 62 gegen die sich in der Wechselposition befindenden, zugeordneten oberen Einspannwellen 21 bewegbar bzw. verschiebbar, wie in Fig. 1 gestrichelt angedeutet, um zu bearbeitende Linsen 2 an diese zu übergeben oder bearbeitete Linsen 2 von diesen zu übernehmen.

Der Linsenförderer 70 dient der Zuförderung von zu bearbeitenden Linsen 2, insbesondere in entsprechenden Behältnissen 4, und/oder der Wegförderung von bearbeiteten Linsen 2, insbesondere in entsprechenden Behältnissen 4.

Der Linsenförderer 70 ist vorzugsweise als Flurförderer, insbesondere Gurt- oder Bandförderer, ausgebildet.

Die Linsen 2 bzw. Behältnisse 4 sind mittels des Linsenförderers 70 vorzugsweise zumindest im Wesentlichen horizontal und/oder linear und/oder seitlich entlang der Vorrichtung 1 in einer Hauptförderrichtung H förderbar.

Die Ladeeinrichtung 30 dient vorzugsweise einem Entnehmen der zu bearbeitenden Linsen 2 von dem Förderer 70 bzw. aus den entsprechenden Behältnissen 4.

Vorzugsweise enthält jedes Behältnis 4 ein Paar von Linsen 2, insbesondere also eine rechte und linke Linse 2, für eine nicht dargestellte Brille bzw. ein nicht dargestelltes Brillengestell.

Der Linsenförderer 70 ist vorzugsweise an einer Seite der Vorrichtung 1 angeordnet und/oder erstreckt sich zumindest im Wesentlichen über die gesamte Länge bzw. Breite der Vorrichtung 1.

Die Schwenkachse SL der Ladeeinrichtung 30 bzw. Schwenkeinrichtung 37 verläuft vorzugsweise zumindest im Wesentlichen vertikal und/oder senkrecht zu der Hauptförderrichtung H und/oder neben dem Linsenförderer 70.

Gleiches gilt vorzugsweise für die Schwenkachse SE der Entladeeinrichtung 50 bzw. deren Schwenkeinrichtung 53.

Vorzugsweise entspricht die Linear- bzw. Bewegungsachse AL der Ladeeinrichtung 30 bzw. der Sauger 31, 32 jeweils einer Mittenachse und/oder verläuft die Bewegungsachse AL zumindest im Wesentlichen vertikal, parallel zur Schwenkachse SL und/oder senkrecht zur Verschieberichtung VL.

Die Linear- bzw. Bewegungsachse AE der Entladeeinrichtung 50 bzw. deren Linearantrieb bzw. Pneumatikzylinder 52 entspricht vorzugsweise einer Mittenachse und/oder verläuft zumindest im Wesentlichen vertikal, parallel zur Schwenkachse SE und/oder senkrecht zur Verschieberichtung VE.

Die Bewegungsachse bzw. Verschieberichtung VL der Ladeeinrichtung 30 bzw. für deren Schwenkeinrichtung 37 verläuft vorzugsweise zumindest im Wesentlichen horizontal und/oder parallel zu der Hauptförderrichtung H und/oder senkrecht zu der Schwenkachse SL.

Gleiches gilt vorzugsweise für die Bewegungsachse bzw. Verschieberichtung VE der Entladeeinrichtung 50 bzw. deren Schwenkeinrichtung 53, insbesondere wobei die Verschieberichtung VE senkrecht zu der Schwenkachse SE verläuft.

Vorzugsweise verlaufen die Bewegungsachsen bzw. Verschieberichtungen VL und VE parallel oder in einer Flucht.

Vorzugsweise verlaufen die Linear- bzw. Bewegungsachsen AL der beiden Linearantriebe bzw. Pneumatikzylinder 35, 36 der Ladeinrichtung 30 zumindest im Wesentlichen parallel zueinander.

Vorzugsweise erstrecken sich die Ladearme 33, 34 der Ladeeinrichtung 30 zumindest im Wesentlichen in einer Schwenkebene bezüglich der Schwenkachse SL und/oder in einer Ebene des Schwenkarms 39 und/oder abgewinkelt bzw. zumindest im Wesentlichen quer zu dem Schwenkarm 39.

Vorzugsweise sind die beiden Ladearme 33, 34 der Ladeeinrichtung 30 im Bereich ihrer freien Enden bzw. gehaltenen Sauger 31, 32 voneinander beabstandet. Insbesondere laufen die Ladearme 33, 34 zumindest im Wesentlichen V-förmig auseinander.

Vorzugsweise sind die beiden Linearantriebe bzw. Pneumatikzylinder 35, 36 unabhängig voneinander steuerbar oder aktuierbar. Jedoch ist alternativ auch eine kombinierte Bewegung der beiden Ladearme 33, 34 bzw. der beiden Sauger 31, 32 insbesondere nur mittels eines Linearantriebs bzw. Pneumatikzylinders 35 oder 36 in Richtung der Bewegungsachse AL möglich.

Vorzugsweise verläuft bzw. verlaufen die Drehachse D der Bearbeitungseinrichtung 20 bzw. Einspannwellen 21, 22 und/oder die Schwenkachse SB der Bearbeitungseinrichtung 20 zumindest im Wesentlichen vertikal und/oder parallel zu der Schwenkachse SL bzw. SE der Ladeeinrichtung 30 bzw. Entladeeinrichtung 50.

Vorzugsweise verlaufen die Drehachse(n) D und die Schwenkachse SB parallel zueinander.

Vorzugsweise verläuft die Linearachse bzw. Verschieberichtung VZ des Zwischenförderers 60 zumindest im Wesentlichen vertikal und/oder parallel bzw. koaxial zu der Drehachse D der Bearbeitungseinrichtung 20 bzw. oberen Einspannwellen 21.

Vorzugsweise verläuft die Messachse bzw. Zentralachse C der Messeinrichtung 10 zumindest im Wesentlichen vertikal.

Vorzugsweise verläuft die Bewegungsachse AL der Ladeeinrichtung 30 parallel zu der Mess- bzw. Zentralachse C der Messeinrichtung 10 und/oder zu der Drehachse D der Bearbeitungseinrichtung 20.

Vorzugsweise ist der Greifer 11 der Messeinrichtung 10 zumindest im Wesentlichen auf der gleichen Höhe wie der Zwischenförderer 60 bzw. dessen Sauger 61 oder Schlitten 62 in der abgesenkten bzw. in Fig. 1 gezeigten Stellung angeordnet.

Vorzugsweise weist die Vorrichtung 1 ein Gestell 5 auf, das die Messeinrichtung 10, die Bearbeitungseinrichtung 20, die Ladeeinrichtung 30, die Entladeeinrichtung 50, den Zwischenförderer 60, den Linsenförderer 70 und/oder die Steuereinrichtung 80 trägt.

Besonders bevorzugt ist bzw. sind die Schlittenführung(en) 28, 41, 56 und/oder 63 mit dem Gestell 5 verbunden oder von diesem getragen.

Die Steuereinrichtung 80 dient insbesondere einer Steuerung der Messeinrichtung 10, Bearbeitungseinrichtung 20, Ladeeinrichtung 30, Entladeeinrichtung 50, des Zwischenförderers 60 und/oder des Linsenförderers 70.

Vorzugsweise kann die Steuereinrichtung 80 die erforderlichen Daten für die gewünschte Form F derjeweiligen Linse 2 bereitstellen, beispielsweise durch Abruf von einer entsprechenden Datenbank, einem Computersystem oder einem entsprechenden Scanner oder Lesegerät zur Erfassung der Form eines Brillengestells o. dgl. Gegebenenfalls kann die Messeinrichtung 10 auch zur Erfassung der Form eines Brillengestells zur Bestimmung der gewünschten Linsenform F dienen bzw. eingesetzt werden.

Vorzugsweise werden, insbesondere von der Vorrichtung 1, der Messeinrichtung 10 und/oder der Steuereinrichtung 80, zusätzlich zu der für die jeweilige Brille erforderlichen Linsenform F insbesondere auch die optischen Daten der Linse 2 bei der endgültigen Festlegung der Linsenform F bzw. deren Lage auf der Linse 2 berücksichtigt.

Nachfolgend werden verschiedene Aspekte der vorliegenden Erfindung bzw. der vorschlagsgemäßen Vorrichtung 1 bzw. des vorschlagsgemäßen Verfahrens näher erläutert.

Der Linsenförderer 70 fördert der Vorrichtung 1 zu bearbeitende Linsen 2 zu. Insbesondere werden die Linsen 2 in den Behältnissen 4 (Trays) gefördert.

Die Ladeeinrichtung 30 greift die zu bearbeitenden Linsen 2 vorzugsweise einzelweise, insbesondere zunächst mittels des ersten Saugers 31, wie in Fig. 7 dargestellt. Es ist jedoch auch möglich, dass die Ladeeinrichtung 30 die Linsen 2 mittels des (zweiten) Saugers 32 in den Behältnissen 4 greift und zur Messeinrichtung 10 fördert, insbesondere wenn die Ladeeinrichtung 30 nur einen einzigen Sauger aufweist.

Die Ladeeinrichtung 30 greift oder hält die Linse 2 zunächst mit dem ersten Sauger 31. Dies erfolgt insbesondere durch entsprechendes Verschieben in Verschieberichtung VL, Verschwenken um die Schwenkachse SL und/oder Absenken bzw. Anheben in Richtung der Bewegungsachse AL.

Die Ladeeinrichtung 30 übergibt die Linse 2 an die Messeinrichtung 10, insbesondere an deren Greifer 11.

Die Ladeeinrichtung 30 bzw. der erste Sauger 31 oder der zweite Sauger 32 wird aus der Messeinrichtung 10 bzw. den Messbereich für das Licht L (vgl. Fig. 1) wieder herausbewegt, um ein (erstes) Messen bzw. Vermessen der Linse 2, insbesondere der Außenkontur des Linse 2 bzw. des Randes 3, zu ermöglichen. Es ist jedoch auch möglich, dass ein (erstes) Messen bzw. Vermessen der Linse 2 erfolgt, ohne dass die Ladeeinrichtung 30 bzw. der (erste) Sauger 31 aus der Messeinrichtung 10 bzw. den Messbereich für das Licht L wieder herausbewegt wird und/oder dass die Ladeeinrichtung 30, insbesondere der erste Sauger 31, die Linse 2 beim Messen bzw. Vermessen der Linse 2 (weiterhin) hält, insbesondere für den nachfolgenden Zentrierschritt wie weiter unten beschrieben.

Der Greifer 11 ist derart ausgebildet, dass er die Linse 2 in der von der Ladeeinrichtung 30 übergebenen Position und Orientierung hält. Dies wird insbesondere durch eine federbelastete oder sonstige Anlage der Haltefinger 12 am Rand 3 der Linse 2 erreicht. Jedoch sind auch andere konstruktive Lösungen möglich.

Bei dem (ersten) Messen bzw. Vermessen wird vorzugsweise der Rand 3 bzw. die Außenkontur der Linse 2 erfasst und/oder die geometrische Mitte G der Linse 2 bestimmt.

Vorzugsweise wird anschließend die Linse 2 zentriert, insbesondere in der zuvor bestimmten geometrischen Mitte G, vorzugsweise derart, dass die geometrische Mitte G zumindest im Wesentlichen in der Zentralachse C liegt bzw. die Zentralachse C durch die geometrische Mitte G verläuft.

Vorzugsweise wird in einem anschließenden Zentrierschritt die Linse 2 zur Zentrierung vom Greifer 11 freigegeben bzw. losgelassen und mittels der Ladeeinrichtung 30, insbesondere des ersten Saugers 31, derart bewegt, dass die Linse 2 relativ zur Messeinrichtung 10 ausgerichtet bzw. zentriert ist.

Bei der Ausrichtung kann zusätzlich oder alternativ zur Zentrierung ggf. auch ein Verkippen der Linse 2 in eine Horizontallage bzw. gewünschte Kipplage erfolgen, insbesondere so dass die Tangentialebene an dem Punkt, an dem die Ladeeinrichtung 30 angreift, oder an der bestimmten geometrischen Mitte G zumindest im Wesentlichen horizontal oder senkrecht zu einer Mess- bzw. Zentrierachse C verläuft. Dies kann beispielsweise durch optionales Umgreifen und/oder durch entsprechende Ausbildung des Saugers 31 oder Einsatz des Saugers 32 erfolgen.

Besonders bevorzugt wird die Linse 2 also mittels der Ladeeinrichtung 30 zentriert an der mittels der Messeinrichtung 10 bestimmten geometrischen Mitte G an die Messeinrichtung 10 übergeben bzw. von dem Greifer 11 zentriert gegriffen.

Vorzugsweise bzw. optional wird anschließend der optische Referenzpunkt O bestimmt, vorzugsweise iterativ, insbesondere zunächst in einem ersten Schritt approximativ und anschließend in einem zweiten Schritt genau bzw. genauer.

Besonders bevorzugt wird bzw. werden zur Bestimmung des optischen Referenzpunkts O die Ladeinrichtung 30, insbesondere der erste Sauger 31 und/oder der zweite Sauger 32, aus der Messeinrichtung 10 bzw. den Messbereich wieder herausbewegt.

Die Messung bzw. Bestimmung des optischen Referenzpunkts O kann bei einer sphärischen Fläche beispielweise durch eine Scheitelbrechwertmessung oder optisehe Projektion, wie Punkten auf einem definierten Kreis, erfolgen. Bei anderen Flächen, insbesondere sogenannten Freiformflächen, multifokalen Linsen o. dgl. kann dies schwieriger sein, wobei beispielsweise die Markierungen M erfasst und zur Bestimmung des optischen Referenzpunkts O benutzt werden können, sofern vorhanden. Je nach Bedarf kann beispielweise die Steuereinrichtung 80 erforderliche Informationen und Daten der Messeinrichtung 10 zur Verfügung stellen bzw. die Steuereinrichtung 80 diese Daten bei der Auswertung und Bestimmung des optischen Referenzpunkts O berücksichtigen.

Nach der bevorzugten ersten bzw. approximativen Bestimmung des optischen Referenzpunkts O wird die Linse 2 vorzugsweise nochmals gegriffen, und zwar im - insbesondere approximativ bestimmten - optischen Referenzpunkt O, insbesondere von der Ladeeinrichtung 30, besonders bevorzugt mittels des zweiten Saugers 32.

Besonders bevorzugt wird die Linse 2 im mittels der Messeinrichtung 10 bestimmten optischen Referenzpunkt O gehalten und anschließend in einer gewünschten Horizontallage bzw. Kipplage ausgerichtet, um eine optionale zweite bzw. genauere Bestimmung des optischen Referenzpunkts O zu ermöglichen. Die zweite Messung in der Horizontallage bzw. gewünschten Kipplage ermöglicht die Minimierung von Messfehlern, insbesondere die Minimierung eines eventuellen Paralaxenfehlers, sodass die zweite Messung eine genauere Bestimmung des optischen Referenzpunkts O als die erste Messung ermöglicht.

Nach dem Greifen der Linse 2 durch den (zweiten) Greifer bzw. Sauger 32 wird der Greifer 11 der Messeinrichtung 10 geöffnet und die Linse 2 in einer gewünschten Horizontallage bzw. Kipplage - vorzugsweise mittels des zweiten Saugers 32 - ausgerichtet, insbesondere so, dass die Tangentialebene TO am optischen Referenzpunkt O zumindest im Wesentlichen horizontal bzw. senkrecht zu der Zentralachse C verläuft.

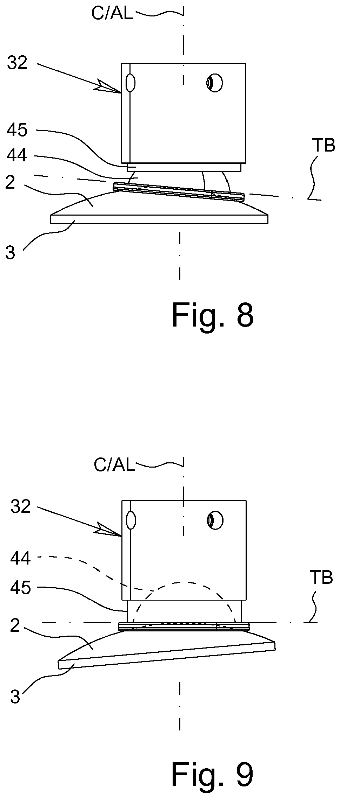

Die Ladeeinrichtung 30 bzw. deren (zweiter) Sauger 32 ist vorzugsweise derart ausgebildet, dass die Linse 2 in der gewünschten Horizontallage bzw. Kipplage ausgerichtet werden kann, insbesondere so, dass die am (approximativ bzw. im ersten Schritt) bestimmten optischen Referenzpunkt O gegriffene Linse 2 mit ihrer Tangentialebene TO an diesem Punkt insbesondere horizontal bzw. senkrecht zu der Zentralachse C ausgerichtet bzw. gekippt werden kann. Dieses Ausrichten erfolgt später nochmals nach dem Greifen der Linse 2 an dem Blockpunkt B, so dass auf die diesbezüglichen späteren Erläuterungen - insbesondere im Zusammenhang mit Fig. 8 und 9 - verwiesen werden darf, die insbesondere entsprechend für die Ausrichtung der Linse 2 am bestimmten optischen Referenzpunkt O gelten.

Nach dem gewünschten Ausrichten der Kipplage und/oder insbesondere erneuten Zentrieren der Linse 2 wird diese von dem Greifer 11 wieder erfasst und in der gewünschten (neuen) Ausrichtung und/oder Lage gehalten.

Die Ladeeinrichtung 30 bzw. der erste Sauger 31 oder der zweite Sauger 32 wird dann wieder von der Messeinrichtung 10 wegbewegt bzw. aus dem Messbereich herausbewegt.

Es erfolgt dann das optionale (zweite) Messen bzw. Vermessen der Linse 2 zur genaueren Bestimmung des optischen Referenzpunkts O. Hierbei ist zu berücksichtigen, dass die Linse 2 vorher am gemessenen optischen Referenzpunkt O in ihrer Kipplage ausgerichtet wurde, insbesondere so dass die Tangentialebene TO am gemessenen optischen Referenzpunkt O horizontal bzw. senkrecht zu der Zentralachse C verläuft. Dementsprechend wird eine besonders genaue bzw. fehlerfreie (zweite) Bestimmung des optischen Referenzpunkts O ermöglicht. Vorzugsweise geht mit der Bestimmung des optischen Referenzpunkts O auch die Bestimmung der Drehlage der Linse 2, also der Drehorientierung, einher, auch wenn dies nicht weiter ausgeführt wird. Die Informationen über die Lage des optischen Referenzpunkts O enthalten daher insbesondere auch Informationen über die Drehlage der Linse 2 und werden entsprechend, insbesondere bei der Bestimmung der Lage der Linsenform F und bei der Bestimmung des Blockpunkts B, berücksichtigt, auch wenn dies nicht näher ausgeführt wird.

Der beim ersten Messen bestimmte Referenzpunkt O und der beim zweiten Messen bestimmte Referenzpunkt O können sich unterscheiden, also beabstandet sein, aber ggf. auch übereinstimmen. Normalerweise liegt der zuerst bestimmte optische Referenzpunkt O (potentiell) etwas weiter entfernt von dem tatsächlichen optischen Referenzpunkt O der Linse 2 als der danach bestimmte (genauere) optische Referenzpunkt O. Diese potentiell unterschiedlichen Punkte werden in Fig. 4 nicht getrennt dargestellt und auch nicht unterschiedlich bezeichnet.

Vorzugsweise wird nach der (genaueren bzw. wiederholten) Bestimmung des optischen Referenzpunkts O der Blockpunkt B bestimmt, insbesondere berechnet, wobei der besonders genau bestimmte optische Referenzpunkt O sowie die sonstigen Parameter, wie die gewünschte Linsenform F und deren Lage relativ zum optischen Referenzpunkt O, berücksichtigt werden.

Die Bestimmung des Blockpunkts B, die vorzugsweise gleichzeitig oder nach der Festlegung der Lage der gewünschten Linsenform F auf der Linse 2, erfolgt, kann vorzugsweise von der Messeinrichtung 10 und/oder Steuereinrichtung 80 durchgeführt oder unterstützt werden.

Vorzugsweise wird die Linse 2 nach Bestimmung des Blockpunkts B in diesem mittels der Ladeeinrichtung 30, insbesondere des zweiten Saugers 32, gegriffen und ausgerichtet. Insbesondere wird die Linse 2 derart am Blockpunkt B ausgerichtet, dass die Tangentialebene TB am Blockpunkt B horizontal bzw. senkrecht zu der Zentralachse C verläuft.

In Fig. 8 und 9 ist schematisch dargestellt, wie insbesondere die Tangentialebene TB am Blockpunkt B hier vorzugsweise horizontal, insbesondere mittels des zweiten Saugers 32, ausgerichtet wird. Es ist jedoch auch möglich, dass die Linse 2 mittels des ersten Saugers 31 am Blockpunkt B gegriffen und ausgerichtet wird

Besonders bevorzugt wird die Linse 2 nacheinander zunächst im mittels der Messeinrichtung 10 bestimmten optischen Referenzpunkt O und anschließend in dem berechneten Blockpunkt B von der Ladeeinrichtung 30, besonders bevorzugt von demselben (zweiten) Sauger 32, gehalten.

Vorzugsweise erfasst die Ladeeinrichtung 30 die Linse 2 mit dem zweiten Sauger 32 am optischen Referenzpunkt O und am Blockpunkt B, um diese jeweils in der gewünschten Horizontallage bzw. Kipplage auszurichten. Es ist jedoch auch möglich, dass der erste Sauger 31 die Linse 2 am optischen Referenzpunkt O und/oder am Blockpunkt B ausrichtet. Im Folgenden soll die Ausrichtung der Linse 2 am Blockpunkt B mittels des zweiten Saugers 32 anhand von Fig. 8 und 9 erläutert werden. Vorzugsweise erfolgt die Ausrichtung der Linse 2 am optischen Referenzpunkt O mittels des zweiten Saugers 32 zumindest im Wesentlichen auf die gleiche oder eine ähnliche Weise.

Der zweite Sauger 32 ist vorzugsweise als Pendelsauger ausgebildet. Er weist vorzugsweise ein insbesondere karlottenförmiges Saugelement 44 auf, das sich in gewünschter Weise auch geneigt an die Oberfläche der Linse 2 anlegen kann, wie in Fig. 8 und Fig. 9 schematisch angedeutet.

Wenn der Blockpunkt B außermittig liegt bzw. vom optischen Referenzpunkt O abweicht, kann die Tangentialebene TB dann dementsprechend geneigt sein, insbesondere relativ zu der Bewegungsachse AL der Ladeeinrichtung 30 bzw. des zweiten Saugers 32 bzw. zu der Mess- oder Zentralachse C, wie in Fig. 8 beispielhaft angedeutet. Das Saugelement 44 kann sich entsprechend geneigt an die Linse 2 anlegen, wie Fig. 8 angedeutet.

Nach dem Greifen bzw. Halten der Linse 2 am Blockpunkt B wird der Greifer 11 geöffnet und die Ladeeinrichtung 30 kann die Linse 2 der Bearbeitungseinrichtung 20 bzw. dem optionalen Zwischenförderer 60 zufördern.

Vorzugsweise wird die Linse 2 nach dem Greifen bzw. Halten am Blockpunkt B in eine gewünschte Kipplage bzw. Horizontallage ausgerichtet, besonders bevorzugt derart, dass die Tangentialebene TB am gehaltenen bzw. bestimmten Blockpunkt B zumindest im Wesentlichen horizontal und/oder senkrecht zu der Bewegungsachse AL bzw. Zentralachse C und/oder späteren Drehachse D bei der Bearbeitung verläuft.

Beim Darstellungsbeispiel erfolgt das Ausrichten vorzugsweise dadurch, dass das Saugelement 44 mittels eines Ausrichtelements 45, wie beispielweise einer Ausrichthülse, in der genannten gewünschten Weise ausgerichtet wird. Insbesondere wird das Ausrichtelement 45 relativ zu dem Saugelement 44 derart verschoben, dass das Saugelement 44 in die gewünschte Ausrichtung bzw. in eine Normalstellung (zurück) gekippt bzw. geschwenkt wird, wie in Fig. 9 angedeutet.

Das genannte Ausrichten des Saugelements 44 ist insbesondere durch den vorzugsweise umlaufenden Kragen des Saugelements 44 einfach möglich, der an der Stirnfläche des Ausrichtelements 45 zur Anlage kommt, um die gewünschte Ausrichtung zu bewirken. Jedoch sind auch andere Konstruktionen möglich.

Nach dem Bestimmen des Blockpunkts B und Ausrichten der Linse 2 am Blockpunkt B wird die Linse 2 der Bearbeitungseinrichtung 20 bzw. dem vorgeordneten Zwischenförderer 60 zugeführt. Dies erfolgt vorzugsweise mittels der Ladeeinrichtung 30 bzw. des zweiten Saugers 32.

Die in ihrer Kipplage im genannten Sinne ausgerichtete Linse 2 wird dann insbesondere an den Zwischenförderer 60 bzw. einen Sauger 61 des Zwischenförderers 60 übergeben.

Es ist anzumerken, dass insbesondere auch konstruktive Lösungen möglich sind, bei denen die Ladeeinrichtung 30 lediglich einen Sauger aufweist, vorzugsweise wobei der Sauger die beschriebenen Verfahrensschritte ausführt und/oder die beschriebenen Aspekte, Eigenschaften, Merkmale und/oder Vorteile des ersten Saugers 31 und/oder zweiten Saugers 32 aufweist oder diese vereint.

Der Zwischenförderer 60 ist vorzugsweise so ausgebildet, dass die Kipplage exakt beigehalten wird und die Linse 2 dann mit dieser Kipplage schließlich an die Bearbeitungseinrichtung 20, genauer gesagt an die zugeordnete obere Einspannwelle 21 in der Wechselposition übergeben werden kann.

Beim Darstellungsbeispiel ist der Sauger 61 des Zwischenförderers 60 vorzugsweise als sogenannter Pendelsauger ausgebildet, also insbesondere mit einem Saug-element versehen, das vorzugsweise entsprechend dem Saugelement 44 verkippbar ist, aber seine Kipplage nach dem Ansaugen beibehält.

Nachdem die erste von einem Paar von Linsen 2 an den Zwischenförderer 60 übergeben wurde, verfährt die Ladeeinrichtung 30 mit der zweiten zugehörigen Linse 2 entsprechend, nimmt diese also aus dem Behältnis 4 und führt diese zunächst der Messeinrichtung 10 zum entsprechenden Messen und Bestimmen zunächst des optischen Referenzpunkts O und dann des Blockpunkts B zu. Dies erfolgt insbesondere so wie bereits beschrieben.

Anschließend wird diese zweite Linse 2 wiederum dem Zwischenförderer 60 zugeführt, insbesondere an den Sauger 61 mit bzw. in der gewünschten Kipplage bzw. Ausrichtung übergeben.

Besonders bevorzugt wird also die Linse 2 nach dem Messen dem Zwischenförderer 60 übergeben, der die Bearbeitungseinrichtung 20 mit der Linse 2 bzw. jeweils zwei Linsen 2 belädt und entlädt und/oder der unabhängig von der vorgeordneten Ladeeinrichtung 30 und der nachgeordneten Entladeeinrichtung 50 arbeitet. Dies ist einem optimierten Ablauf und/oder einer Minimierung des Umgreifens zuträglich.

Es ist anzumerken, dass die Messeinrichtung 10 vorzugsweise auch jeweils die Orientierung bzw. Drehlage der jeweiligen Linse 2 bestimmt. Diese Drehlage wird vorzugsweise in definierter Weise an die Bearbeitungseinrichtung 20 bzw. den Zwischenförderer 60 übergeben. Dementsprechend kann und insbesondere wird die jeweilige Drehlage der Linse 2 bei der Bearbeitung berücksichtigt. Beispielsweise können die oberen Einspannwellen 21 vor Greifen der jeweiligen Linse 2 entsprechend gedreht bzw. rotatorisch ausgerichtet werden. Grundsätzlich sind die Sauger 31, 32, 51 und 61 vorzugsweise nicht drehbar, insbesondere um die Drehlage der Linse 2 - auch beim Kippen der Linse 2 - beizubehalten.

Ein besonderer Vorteil der vorschlagsgemäßen Vorrichtung 1 und des vorschlagsgemäßen Verfahrens liegt darin, dass keine Ausrichtung in einer bestimmten Drehlage erfolgen muss, also die Linse 2 beispielsweise in der Messeinrichtung 10 nicht gedreht werden muss, sondern dass die Linsen 2 eine beliebige Drehlage aufweisen können und diese beliebige Drehlage bestimmt und bei der weiteren Bearbeitung - beispielsweise durch Drehen der Sauger 27 - berücksichtigt wird.

Ferner ist anzumerken, dass auch konstruktive Lösungen möglich sind, bei denen zwei Linsen 2 zumindest im Wesentlichen gleichzeitig mittels der Ladeeinrichtung 30 gehandhabt werden können, also die Ladeeinrichtung 30 zwei Linsen 2 gleichzeitig aus dem Behältnis 4 nimmt, diese gleichzeitig der oder mehreren, insbesondere zwei, Messeinrichtungen 10 zum Messen und Bestimmen des jeweiligen optischen Referenzpunkts O und des jeweiligen Blockpunkts B zuführt und anschließend gleichzeitig dem Zwischenförderer 60 übergibt, vorzugsweise jeweils mit bzw. in der gewünschten Kipplage bzw. Ausrichtung.

Nach dem Beladen des Zwischenförderers 60 bzw. der beiden Sauger 61 mit zu bearbeitenden Linsen 2 erfolgt die Übergabe an die Bearbeitungseinrichtung 20 bzw. die zugeordneten oberen Einspannwellen 21. Hierzu werden die Schlitten 62 in die Verschieberichtung VZ bzw. aus der in Fig. 1 gezeigten Position nach oben gegen die Einspannwellen 21 gefahren. Die Einspannwellen 21 greifen bzw. halten dann die Linsen 2 mittels entsprechender Sauger 27, wobei die bisherige Ausrichtung bzw. Kipplage und/oder Drehlage der Linse 2 beibehalten bleibt. Nach diesem Beladen wird der Zwischenförderer 60 bzw. werden die Schlitten 62 wieder nach unten gefahren bzw. von den übergebenen Linsen 2 abgerückt.

Anschließend kann nach fertiger Bearbeitung der sich normalerweise bereits im Arbeitsraum 23 befindenden Linsen 2 ein Wechsel der bearbeiteten Linsen 2 aus dem Arbeitsraum 23 in die Wechselposition und umgekehrt der zu bearbeitenden Linsen 2 aus der Wechselposition in den Arbeitsraum 23 erfolgen. Dies erfolgt besonders bevorzugt durch entsprechendes Drehen oder Schwenken des Kopf- oder Lagerteils 26 der Bearbeitungseinrichtung 20.

Nach dem Wechsel der Linsen 2 kann im Arbeitsraum 23 die Bearbeitung der neuen Linsen 2 erfolgen. Die unteren Einspannwellen 22 werden vorzugsweise über entsprechende Schlittenführungen 28 und zugeordnete (nicht dargestellte) Antriebe gegen die oberen Einspannwellen 21 bzw. die davon gehaltenen Linsen 2 gefahren, so dass diese entsprechend dazwischen eingespannt werden, wie in Fig. 3 für eine der oberen Einspannwellen 21 und eine der unteren Einspannwellen 22 angedeutet.

Dann erfolgt die Bearbeitung, insbesondere Randbearbeitung, in gewünschter Weise, wobei der Werkzeugantrieb 24 mit dem zugeordneten Werkzeug 25 vorzugsweise in mehreren Achsen bewegt werden kann, um die gewünschte Bearbeitung zu ermöglichen.

Des Weiteren erfolgt vorzugsweise ein Werkzeugwechsel je nach Bedarf, wobei der Werkzeugwechsel insbesondere automatisiert erfolgt.

Während die Bearbeitung im Arbeitsraum 23 erfolgt, werden die bereits bearbeiteten Linsen 2, die sich jetzt in der Wechselposition, also auf der Seite des Linsenförderers 70 befinden, entladen bzw. wieder auf den Linsenförderer 70 zurückgelegt.

Zum Entladen werden die bearbeiteten Linsen 2 vorzugsweise von den Zwischenförderer 60 wieder übernommen, indem die Schlitten 62 nach oben fahren und die bearbeiteten Linsen 2 mit den Saugern 61 greifen. Die Linsen 2 werden dann von den oberen Einspannwellen 21 abgerückt und insbesondere nach unten bewegt. Dort werden die Linsen 2 dann vorzugsweise einzelweise von den Entladeeinrichtung 50 gegriffen, insbesondere mittels des Saugers 51, und an einen entsprechenden leeren Platz in einem Behältnis 4 zurückgelegt, vorzugsweise an den gleichen Platz und in das gleiche Behältnis 4, aus dem die Linse 2 vorher entnommen wurde. Es sind jedoch auch andere Lösungen möglich, insbesondere bei denen die Linsen 2 gleichzeitig von der Entladeeinrichtung 50 gegriffen werden.

Besonders bevorzugt ist das jeweilige Behältnis 4 nämlich mit einem Informationsträger, wie einem RFID-Chip, Barcode, einer Einsteckkarte o.dgl., versehen, um die Linsen 2 bzw. den jeweiligen Auftrag zu identifizieren oder identifizierbar zu machen oder gegebenenfalls auch entsprechende Bearbeitungsdaten bereitzustellen.

Nachdem die Entladeeinrichtung 50 die bearbeiteten Linsen 2 von dem Zwischenförderer 60 weggefördert hat, kann die Ladeeinrichtung 30 die nächsten, zu bearbeitenden Linsen 2 dem Zwischenförderer 60 nach dem entsprechenden Messen und Greifen am Blockpunkt B wieder-wie bereits beschrieben - zufördern bzw. übergeben.

Vorzugsweise werden die Sauger bzw. entsprechende Saugelemente zum Ansaugen und Halten der Linse 2 jeweils mittels entsprechender Einrichtungen (nicht dargestellt) unter Unterdruck gesetzt und zum Loslassen der Linse 2 je nach Bedarf wieder belüftet bzw. gegebenenfalls sogar mit leichten Überdruck beaufschlagt.

Vorzugsweise steuert die Steuereinrichtung 80 den gesamten Ablauf bzw. das vorschlagsgemäße Verfahren.

Bei Bedarf kann die Vorrichtung 1 bzw. Steuereinrichtung 80 auf zusätzliche externe Daten, wie erforderliche Bearbeitungsdaten, Daten bzgl. des Gestells bzw. der gewünschten Linsenform F oder sonstiger Dateninformationen, zu greifen.

Einzelne Aspekte und Merkmale des vorgenannten Ablaufs bzw. der vorschlagsgemäßen Vorrichtung 1 bzw. des vorschlagsgemäßen Verfahrens können auch unabhängig voneinander und in beliebiger Kombination realisiert werden, auch wenn diese insgesamt anhand des beschriebenen, besonders bevorzugten Ausführungsbeispiels in Zusammenhang beschrieben werden.

Weitere Aspekte der vorliegenden Erfindung sind:
1. Verfahren zum Bearbeiten, insbesondere Randbearbeiten, einer optischen Linse 2, wobei die Linse 2 - insbesondere in einer Vorrichtung 1 mit einer Messeinrichtung 10 und einer Bearbeitungseinrichtung 20 - sowohl gemessen als auch bearbeitet wird,
   **dadurch gekennzeichnet,**
   dass ein Punkt, insbesondere ein optischer Referenzpunkt O, auf der Linse 2 mittels einer optischen Messung bestimmt wird, die Linse 2 an dem bestimmten Punkt erfasst bzw. gehalten wird und die Linse 2 anschließend in einer gewünschten Horizontallage bzw. Kipplage insbesondere für eine weitere Messung oder eine nachfolgende Bearbeitung ausgerichtet wird, und/oder
   dass der optische Referenzpunkt O zunächst approximativ bestimmt, die Linse 2 anschließend am bestimmten optischen Referenzpunkt O - insbesondere hinsichtlich ihrer Kipplage und/oder Zentrierung - ausgerichtet und der optische Referenzpunkt O dann erneut und vorzugsweise genauer bestimmt wird, und/oder
   dass die geometrische Mitte G der Linse 2 mittels einer optischen Messung bestimmt wird, dann die Linse 2 in der bestimmten geometrischen Mitte G bezüglich einer Zentralachse C ausgerichtet bzw. zentriert wird und anschließend ein optischer Referenzpunkt O oder ein Blockpunkt B der Linse 2 bestimmt wird, und/oder
   dass die Linse 2 nach dem Messen einem Zwischenförderer 60 übergeben wird, der die Bearbeitungseinrichtung 20 mit der Linse 2 bzw. jeweils zwei Linsen 2 belädt und entlädt und/oder der unabhängig von einer vorgeordneten Ladeeinrichtung 30 und einer nachgeordneten Entladeeinrichtung 50 arbeitet.
2. Verfahren gemäß Aspekt 1, dadurch gekennzeichnet, dass die Linse 2 in einem mittels der Messeinrichtung 10 approximativ bestimmten optischen Referenzpunkt O insbesondere mittels eines zweiten Saugers 32 gegriffen und in einer gewünschten Horizontallage bzw. Kipplage ausgerichtet wird, um anschließend den optischen Referenzpunkt O in der Horizontallage bzw. Kipplage erneut und/oder genau bzw. genauer zu bestimmen.
3. Verfahren gemäß Aspekte 1 oder 2, dadurch gekennzeichnet, dass nach Bestimmen des optischen Referenzpunkts O der Blockpunkt B bestimmt wird.
4. Verfahren nach einem der Aspekte 1 bis 3, dadurch gekennzeichnet, dass die Linse 2 nach dem Bestimmen des optischen Referenzpunkts O und/oder des Blockpunkts B von einem Sauger 32 im Blockpunkt B neu gegriffen wird.
5. Verfahren gemäß der Aspekte 1 bis 4, dadurch gekennzeichnet, dass die Linse 2 nach dem Bestimmen des Blockpunkts B an diesem erfasst und in einer gewünschten Horizontallage bzw. Kipplage ausgerichtet wird und in dieser Ausrichtung an den Zwischenförderer 60 bzw. die Bearbeitungseinrichtung 20 übergeben wird.
6. Verfahren gemäß der Aspekte 1 bis 5, dadurch gekennzeichnet, dass das Ausrichten der Linse 2 in eine gewünschte Horizontallage bzw. Kipplage dadurch erfolgt, dass die Tangentialebene T an den Punkt, an dem Linse 2 gehalten wird, entsprechend, insbesondere senkrecht zu einer Mess- oder Zentrierachse C oder Drehachse D, ausgerichtet wird.
7. Verfahren gemäß der Aspekte 1 bis 6, dadurch gekennzeichnet, dass der Zwischenförderer 60 ein oder zwei Linsen 2 nach dem Messen aufnimmt und diese an ein oder zwei obere Einspannwellen 21 der Bearbeitungseinrichtung 20 übergibt.
8. Verfahren gemäß der Aspekte 1 bis 7, dadurch gekennzeichnet, dass in der Bearbeitungseinrichtung 20 jeweils zwei Linsen 2 gleichzeitig bearbeitet werden.
9. Verfahren gemäß Aspekt 8, dadurch gekennzeichnet dass zwei Paare von oberen Einspannwellen 21 der Bearbeitungseinrichtung 20 abwechselnd zu bearbeitende Linsen 2 in einem Arbeitsraum 23 halten, während jeweils das andere Paar außerhalb des Arbeitsraums 23 ent- und/oder beladen wird.
10. Vorrichtung 1 zur Bearbeitung, insbesondere Randbearbeitung, einer optischen Linse 2, wobei die Vorrichtung 1 aufweist:
   eine Messeinrichtung 10 für die Linse 2;
   eine Bearbeitungseinrichtung 20 zur Bearbeitung, insbesondere Randbearbeitung, der Linse 2; und
   eine Ladeeinrichtung 30 zur Zuführung der Linse 2 zu der Messeinrichtung 10 und/oder der Bearbeitungseinrichtung 20,
   **dadurch gekennzeichnet,**
   dass die Ladeeinrichtung 30 zwischen der Messeinrichtung 10 und der Bearbeitungseinrichtung 20 angeordnet oder dort schwenkgelagert ist,
   dass die Ladeeinrichtung 30 zum Halten der Linse 2 in einem mittels der Messeinrichtung 10 bestimmten Punkt, insbesondere in einem so bestimmten optischen Referenzpunkt O, und anschließenden Ausrichten der Linse 2 in einer gewünschten Horizontallage bzw. Kipplage ausgebildet ist,
   dass die Ladeeinrichtung 30 zum Halten und insbesondere Ausrichten der Linse 2 in einem mittels der Messeinrichtung 10 bestimmten optischen Referenzpunkt O und anschließend in einem bestimmten Blockpunkt B ausgebildet ist,
   dass die Vorrichtung 1 derart ausgebildet ist, dass die Linse 2 der Messeinrichtung 10 zugeführt wird, um in einem optionalen ersten Messen einen optischen Referenzpunkt O der Linse 2 approximativ zu bestimmen, und die Linse 2 dann - insbesondere mittels der Ladeeinrichtung 30 - im bestimmten optischen Referenzpunkt O ausgerichtet wird, um in einem zweiten Messen den optischen Referenzpunkt O der Linse 2 genauer zu bestimmen,
   dass die Vorrichtung 1 eine unabhängig von der Ladeeinrichtung 30 arbeitende Entladeeinrichtung 50 zur Entnahme bzw. Ablage einer bearbeiteten Linse 2 aufweist, und/oder
   dass die Vorrichtung 1 oder Bearbeitungseinrichtung 20 zusätzlich zur Ladeeinrichtung 30 und insbesondere zusätzlich zur Entladeeinrichtung 50 einen Zwischenförderer 60 zur Aufnahme von zu bearbeitenden Linsen 2 von der Ladeeinrichtung 30 und Zuführung zu der Bearbeitungseinrichtung 20 sowie zur Entnahme von bearbeiteten Linsen 2 von der Bearbeitungseinrichtung 20 aufweist.
11. Vorrichtung gemäß Aspekt 10, dadurch gekennzeichnet, dass die Ladeeinrichtung 30 einen ersten Greifer bzw. Sauger 31 und einen zweiten Greifer bzw. Sauger 32 aufweist.
12. Vorrichtung gemäß Aspekt 11, dadurch gekennzeichnet, dass die Ladeeinrichtung 30 eine Schwenkeinrichtung 37 mit dem ersten Greifer bzw. Sauger 31 und dem zweiten Greifer bzw. Sauger 32 aufweist.
13. Vorrichtung gemäß Aspekt 11 oder 12, dadurch gekennzeichnet, dass der erste Greifer bzw. Sauger 31 zur Ausrichtung der Linse 2 durch Gewichtskraft und/oder Federkraft ausgebildet ist.
14. Vorrichtung gemäß der Aspekte 10 bis 13, dadurch gekennzeichnet, dass der zweite Greifer bzw. Sauger 32 zur Ausrichtung der Linse 2 mittels eines Ausrichtelements 45 ausgebildet ist.
15. Vorrichtung gemäß der Ansprüche 10 bis 14, dadurch gekennzeichnet, dass der erste Greifer bzw. Sauger 31 und der zweite Greifer bzw. Sauger 32 benachbart an einem oder zwei Ladearmen 33, 34 angeordnet sind.
16. Vorrichtung gemäß der Aspekte 10 bis 15, dadurch gekennzeichnet, dass die Ladeeinrichtung 30 eine insbesondere linear verfahrbare Schwenkeinrichtung 37 aufweist.
17. Vorrichtung gemäß der Aspekte 10 bis 16, dadurch gekennzeichnet, dass die Schwenkeinrichtung 37 ein oder zwei Lineartriebe - vorzugsweise mit zu der Schwenkachse SL zumindest im Wesentlichen paralleler Bewegungsachse AL - mit dem ersten Greifer bzw. Sauger 31 und dem zweiten Greifer bzw. Sauger 32 trägt.
18. Vorrichtung gemäß der Aspekte 10 bis 17, dadurch gekennzeichnet, dass die Ladeeinrichtung 30 zwischen der Messeinrichtung 10 und der Bearbeitungseinrichtung 20 angeordnet oder dort schwenkgelagert ist
19. Vorrichtung gemäß der Aspekte 10 bis 18, dadurch gekennzeichnet, dass die Ladeeinrichtung 30 zum Halten der Linse 2 in einem mittels der Messeinrichtung 10 bestimmten Blockpunkt B und anschließenden Ausrichten in einer gewünschten Horizontallage bzw. Kipplage ausgebildet ist.
20. Vorrichtung gemäß der Aspekte 10 bis 19, dadurch gekennzeichnet, dass die Messeinrichtung 10 einen ortsfesten Greifer 11 zum Halten der Linse 2 während des Messens aufweist.
21. Vorrichtung gemäß der Aspekte 10 bis 20, dadurch gekennzeichnet, dass die Messeinrichtung 10 zur Erfassung einer beliebigen Drehlage der Linse 2 bei der Messung ausgebildet ist und dass die Bearbeitungseinrichtung (20) zur Bearbeitung der Linse 2 unter Berücksichtigung dieser Drehlage ausgebildet ist.
22. Vorrichtung gemäß der Aspekte 10 bis 21, dadurch gekennzeichnet, dass die Bearbeitungseinrichtung 20 einen Arbeitsraum 23 für die Bearbeitung aufweist und außerhalb des Arbeitsraums 23 zur Aufnahme von Linsen 2 von der Ladeeinrichtung 30 oder dem Zwischenförderer 60 unabhängig von der Linsenbearbeitung ausgebildet ist.
23. Vorrichtung nach Aspekt 22, dadurch gekennzeichnet, dass der Zwischenförderer 60 - unabhängig von der Förderung von Linsen 2 in den oder aus dem Arbeitsraum 23 durch die Bearbeitungseinrichtung 20 - mit ein oder zwei Linsen 2 - insbesondere von der Ladeeinrichtung 30 und/oder Entladeeinrichtung 50 - beladbar und/oder entladbar ist.
24. Vorrichtung gemäß der Aspekte 10 bis 23, dadurch gekennzeichnet, dass der Zwischenförderer 60 einen Linearantrieb oder Schlitten 62 mit einem Sauger 61 für die Linse(n) 2 - vorzugsweise zum insbesondere linearen Verschieben - gegen eine oder zwei obere Einspannwellen 21 der Bearbeitungseinrichtung 20 aufweist.
25. Vorrichtung gemäß der Aspekte 10 bis 24, dadurch gekennzeichnet, dass die Vorrichtung 1 bzw. Bearbeitungseinrichtung 20 zur gleichzeitigen Bearbeitung von zwei Linsen 2 ausgebildet ist.
26. Vorrichtung gemäß der Aspekte 10 bis 25, dadurch gekennzeichnet, dass die Entladeeinrichtung 50 auf einer der Messeinrichtung 10 und/oder Ladeeinrichtung 30 abgewandten Seite der Bearbeitungseinrichtung 20 angeordnet oder dort schwenkgelagert ist.
27. Vorrichtung gemäß der Aspekte 10 bis 26, dadurch gekennzeichnet, dass die Entladeeinrichtung 50 eine vorzugsweise linear verfahrbare Schwenkeinrichtung 53 aufweist, die einen Lineartrieb - vorzugsweise mit zu der Schwenkachse SE zumindest im Wesentlichen paralleler Bewegungsachse AE - mit einem Greifer oder Sauger 51 trägt.
28. Vorrichtung gemäß der Aspekte 10 bis 27, dadurch gekennzeichnet, dass die Vorrichtung 1 einen Linsenförderer 70, insbesondere Bandförderer, für die Linsen 2 bzw. Behältnisse 4 zur Zuförderung und Wegförderung von Linsen 2 aufweist.
29. Vorrichtung gemäß Aspekt 28, dadurch gekennzeichnet, dass die Bearbeitungseinrichtung 20 auf einer Seite neben dem Linsenförderer 70 angeordnet ist und dass die Ladeeinrichtung 30 und die Messeinrichtung 10 auf derselben Seite angeordnet sind.
30. Vorrichtung gemäß Aspekt 28 oder 29, dadurch gekennzeichnet, dass die Ladeeinrichtung 30 und die Entladeeinrichtung 50 auf derselben Seite des Linsenförderers 70 angeordnet sind.

### Bezugszeichenliste:

- 1: Vorrichtung
- 2: Linse
- 2A: Vorderseite der Linse
- 2B: Rückseite der Linse
- 3: Rand
- 4: Behältnis
- 5: Gestell
- 10: Messeinrichtung
- 11: Greifer
- 12: Haltefinger
- 13: Messgerät
- 14: Lichtquelle
- 20: Bearbeitungseinrichtung
- 21: obere Einspannwelle
- 22: untere Einspannwelle
- 23: Arbeitsraum
- 24: Werkzeugantrieb
- 25: Werkzeug
- 26: Lagerteil
- 27: Sauger
- 28: Schlittenführung
- 29: Antrieb
- 30: Ladeeinrichtung
- 31: erster Sauger
- 32: zweiter Sauger
- 33: erster Ladearm

- 34: zweiter Ladearm
- 35: erster Pneumatikzylinder
- 36: zweiter Pneumatikzylinder
- 37: Schwenkeinrichtung
- 38: Schwenkantrieb
- 39: Schwenkarm
- 40: Halteelement
- 41: Schlittenführung
- 42: Gewindespindel
- 43: Motor
- 44: Saugelement
- 45: Ausrichtelement
- 50: Entladeeinrichtung
- 51: Sauger
- 52: Pneumatikzylinder
- 53: Schwenkeinrichtung
- 54: Schwenkantrieb
- 55: Schwenkarm
- 56: Schlittenführung
- 57: Stellantrieb
- 60: Zwischenförderer
- 61: Sauger
- 62: Schlitten
- 63: Schlittenführung
- 70: Linsenförderer
- 80: Steuereinrichtung

- AE: Bewegungsachse der Entladeeinrichtung
- AL: Bewegungsachse der Ladeeinrichtung
- B: Blockpunkt
- C: Zentralachse
- D: Drehachse der Bearbeitungseinrichtung
- F: Form
- G: Geometrische Mitte der Linse
- H: Hauptförderrichtung
- L: Licht
- M: Markierung
- N: Nasalseite
- O: Optischer Referenzpunkt
- R: Rahmen
- SB: Schwenkachse der Bearbeitungseinrichtung
- SE: Schwenkachse der Entladeeinrichtung
- SL: Schwenkachse der Ladeeinrichtung
- TB: Tangentialebene am Blockpunkt
- TG: Tangentialebene an der geometrischen Mitte
- TO: Tangentialebene am optischen Referenzpunkt
- TZ: Tangentialebene am Rahmenzentrum
- VE: Verschieberichtung der Entladeeinrichtung
- VL: Verschieberichtung der Ladeeinrichtung
- VZ: Verschieberichtung des Zwischenförderers
- Z: Rahmenzentrum

## Patentansprüche

1. Verfahren zum Randbearbeiten einer optischen Linse (2), wobei die Linse (2) in einer Vorrichtung (1) mit einer Messeinrichtung (10) und einer Bearbeitungseinrichtung (20) sowohl gemessen als auch bearbeitet wird, wobei die Vorrichtung (1) eine Ladeeinrichtung (30) zur Zuführung der Linse (2) zu der Messeinrichtung (10) und/oder der Bearbeitungseinrichtung (20) aufweist, wobei die Linse (2) nach dem Messen mittels der Ladeeinrichtung (30) einem Zwischenförderer (60) übergeben wird,
**dadurch gekennzeichnet,**
**dass** die Vorrichtung (1) eine unabhängig von der Ladeeinrichtung (30) arbeitende Entladeeinrichtung (50) zur Entnahme einer bearbeiteten Linse (2) aufweist und
**dass** der Zwischenförderer (60) unabhängig von der vorgeordneten Ladeeinrichtung (30) und der nachgeordneten Entladeeinrichtung (50) arbeitet.

2. Verfahren nach Anspruch 1, **dadurch gekennzeichnet, dass** der Zwischenförderer (60) eine Linse (2) nach dem Messen aufnimmt und diese an eine obere Einspannwelle (21) der Bearbeitungseinrichtung (20) übergibt.

3. Verfahren nach Anspruch 1 oder 2, **dadurch gekennzeichnet, dass** in der Bearbeitungseinrichtung (20) jeweils zwei Linsen (2) gleichzeitig bearbeitet werden.

4. Verfahren nach einem der vorhergehenden Ansprüche, **dadurch gekennzeichnet, dass** die Entladeeinrichtung (50) auf einer der Ladeeinrichtung (30) abgewandten Seite der Bearbeitungseinrichtung (20) angeordnet ist.

5. Verfahren nach einem der vorhergehenden Ansprüche, **dadurch gekennzeichnet, dass** die Bearbeitung in einem Arbeitsraum (23) der Bearbeitungseinrichtung (20) erfolgt und dass ein Lagerteil (26) der Bearbeitungseinrichtung (20) vier obere Einspannwellen (22) aufweist, die abwechselnd in den Arbeitsraum (23) schwenkbar sind.

6. Verfahren nach einem der vorhergehenden Ansprüche, **dadurch gekennzeichnet, dass** der Zwischenförderer (6) einen Greifer, insbesondere Sauger (61), zum Greifen bzw. zum Halten der Linse (2) an einer Rückseite (2B) und vorzugsweise einen Linearantrieb bzw. Schlitten (62) zum linearen Bewegen bzw. zu Verschieben des Greifers/Saugers (61) aufweist.

7. Verfahren nach einem der vorhergehenden Ansprüche, **dadurch gekennzeichnet, dass** nach einem Bestimmen eines Blockpunkts (B) und Ausrichten der Linse (2) am Blockpunkt (B) die Linse (2) dem der Bearbeitungseinrichtung (2) vorgeordneten Zwischenförderer (60) mittels der Ladeeinrichtung (30) zugeführt wird.

8. Vorrichtung (1) zur Randbearbeitung einer optischen Linse (2), wobei die Vorrichtung (1) aufweist:
eine Messeinrichtung (10) für die Linse (2);
eine Bearbeitungseinrichtung (20) zur Bearbeitung, insbesondere Randbearbeitung, der Linse (2); und
eine Ladeeinrichtung (30) zur Zuführung der Linse (2) zu der Messeinrichtung (10) und/oder der Bearbeitungseinrichtung (20),
**dadurch gekennzeichnet,**
**dass** die Vorrichtung (1) eine unabhängig von der Ladeeinrichtung (30) arbeitende Entladeeinrichtung (50) zur Entnahme einer bearbeiteten Linse (2) aufweist,
**dass** die Vorrichtung (1) zusätzlich zur Ladeeinrichtung (30) und Entladeeinrichtung (50) einen Zwischenförderer (60) aufweist, der unabhängig von der Ladeeinrichtung (30) und der Entladeeinrichtung (50) arbeitet und
**dass** die Vorrichtung (1) einen Linsenförderer (70) für die Linsen (2) bzw. Behältnisse (4) zur Zuförderung und Wegförderung von Linsen (2) aufweist, wobei die Bearbeitungseinrichtung (20), die Ladeeinrichtung (30), die Messeinrichtung (10) und die Entladeeinrichtung (50) auf derselben Seite des Linsenförderers (70) angeordnet sind.

9. Vorrichtung nach Anspruch 8, **dadurch gekennzeichnet, dass** die Messeinrichtung (10) zur Erfassung einer beliebigen Drehlage der Linse (2) bei der Messung ausgebildet ist und dass die Bearbeitungseinrichtung (20) zur Bearbeitung der Linse (2) unter Berücksichtigung dieser Drehlage ausgebildet ist.

10. Vorrichtung nach Anspruch 8 oder 9, **dadurch gekennzeichnet, dass** die Bearbeitungseinrichtung (20) einen Arbeitsraum (23) für die Bearbeitung aufweist und außerhalb des Arbeitsraums (23) zur Aufnahme von Linsen (2) von dem Zwischenförderer (60) unabhängig von der Linsenbearbeitung ausgebildet ist.

11. Vorrichtung nach Anspruch 10, **dadurch gekennzeichnet, dass** der Zwischenförderer (60) - unabhängig von der Förderung von Linsen (2) in den oder aus dem Arbeitsraum (23) durch die Bearbeitungseinrichtung (20) - mit einer Linse (2) von der Ladeeinrichtung (30) beladbar ist.

12. Vorrichtung nach einem der Ansprüche 8 bis 11, **dadurch gekennzeichnet, dass** die Bearbeitungseinrichtung (20) vier obere Einspannwellen (21) aufweist, die von einem schwenkbaren bzw. drehbaren Kopf- oder Lagerteil (26) gehalten, wobei das Lagerteil (26) um eine Schwenkachse (SB) schwenkbar bzw. drehbar ist, um zum Wechseln der Linse (2) die oberen Einspannwellen (21) aus dem Arbeitsraum (23) heraus und wieder hineinschwenken zu können.

13. Vorrichtung nach einem der Ansprüche 8 bis 12, **dadurch gekennzeichnet, dass** der Zwischenförderer (60) einen Linearantrieb oder Schlitten (62) mit einem Sauger (61) für die Linse/n (2) - vorzugsweise zum insbesondere linearen Verschieben - gegen eine obere Einspannwelle (21) der Bearbeitungseinrichtung (20) aufweist.

14. Vorrichtung nach einem der Ansprüche 8 bis 13, **dadurch gekennzeichnet, dass** die Entladeeinrichtung (50) auf einer der Ladeeinrichtung (30) abgewandten Seite der Bearbeitungseinrichtung (20) angeordnet oder dort schwenkgelagert ist.

15. Vorrichtung nach einem der Ansprüche 8 bis 14, **dadurch gekennzeichnet, dass** der Zwischenförderer (60) einen Greifer, insbesondere Sauger, zum Greifen bzw. Halten der Linse (2) an einer Rückseite (2B) der Linse (2) aufweist.

## Claims

1. Method for edge processing an optical lens (2), wherein the lens (2) is both measured and processed in an apparatus (1) with a measuring device (10) and a processing device (20), wherein the apparatus (1) has a loading device (30) for feeding the lens (2) to the measuring device (10) and/or the processing device (20), wherein the lens (2) is transferred to an intermediate conveyor (60) after measurement by means of the loading device (30),
**characterized**
**in that** the apparatus (1) has an unloading device (50) for removing a processed lens (2), the unloading device (50) operating independently of the loading device (30), and
**in that** the intermediate conveyor (60) operates independently of the upstream loading device (30) and the downstream unloading device (50).

2. The method according to claim 1, **characterized in that** the intermediate conveyor (60) picks up a lens (2) after measuring and transfers it to an upper clamping shaft (21) of the processing device (20).

3. Method according to claim 1 or 2, **characterized in that** two lenses (2) are processed simultaneously in each case in the processing device (20).

4. Method according to one of the preceding claims, **characterized in that** the unloading device (50) is arranged on a side of the processing device (20) facing away from the loading device (30).

5. Method according to one of the preceding claims, **characterized in that** the processing is performed in a working space (23) of the processing device (20) and that a bearing part (26) of the processing device (20) comprises four upper clamping shafts (22) which are alternately pivotable into the working space (23).

6. Method according to one of the preceding claims, **characterized in that** the intermediate conveyor (6) comprises a gripper, in particular suction cup (61), for gripping or holding the lens (2) on a rear side (2B) and preferably a linear drive or carriage (62) for linear movement and/or displacement of the gripper/suction cup (61).

7. Method according to one of the preceding claims, **characterized in that** after a blocking point (B) has been determined and the lens (2) has been aligned at the blocking point (B), the lens (2) is fed to the intermediate conveyor (60) arranged upstream of the processing device (2) by means of the loading device (30).

8. Apparatus (1) for edge processing an optical lens (2), the apparatus (1) comprising:
a measuring device (10) for the lens (2);
a processing device (20) for processing, in particular edge processing, the lens (2); and
a loading device (30) for feeding the lens (2) to the measuring device (10) and/or the processing device (20),
**characterized in that**
**in that** the apparatus (1) has an unloading device (50) for removing a processed lens (2), the unloading device (50) operating independently of the loading device (30),
**in that** the apparatus (1) has, in addition to the loading device (30) and unloading device (50), an intermediate conveyor (60) which operates independently of the loading device (30) and the unloading device (50), and
**in that** the apparatus (1) has a lens conveyor (70) for the lenses (2) or containers (4) for feeding in and conveying away lenses (2), the processing device (20), the loading device (30), the measuring device (10) and the unloading device (50) being arranged on the same side of the lens conveyor (70).

9. Apparatus according to claim 8, **characterized in that** the measuring device (10) is designed to detect any rotational position of the lens (2) during the measurement, and **in that** the processing device (20) is designed to process the lens (2) taking this rotational position into account.

10. Apparatus according to claim 8 or 9, **characterized in that** the processing device (20) comprises a working space (23) for processing and is designed outside the working space (23) for receiving lenses (2) from the intermediate conveyor (60) independently of the lens processing.

11. Apparatus according to claim 10, **characterized in that** the intermediate conveyor (60) - independently of the conveying of lenses (2) into or out of the working space (23) by the processing device (20) - can be loaded with a lens (2) from the loading device (30).

12. Apparatus according to one of claims 8 to 11, **characterized in that** the processing device (20) comprises four upper clamping shafts (21) supported by a pivotable and/or rotatable head or bearing part (26), the bearing part (26) being pivotable and/or rotatable about a pivot axis (SB) to enable the upper clamping shafts (21) to be pivoted out of and back into the working space (23) for changing the lens (2).

13. Apparatus according to one of claims 8 to 12, **characterized in that** the intermediate conveyor (60) has a linear drive or carriage (62) with a suction cup (61) for the lens/es (2) - preferably for in particular linear displacement - against an upper clamping shaft (21) of the processing device (20).

14. Apparatus according to one of claims 8 to 13, **characterized in that** the unloading device (50) is arranged on a side of the processing device (20) facing away from the loading device (30) or is pivot-mounted there.

15. Apparatus according to one of claims 8 to 14, **characterized in that** the intermediate conveyor (60) comprises a gripper, in particular a suction cup, for gripping or holding the lens (2) on a rear side (2B) of the lens (2).

## Revendications

1. Procédé de traitement des bords d'une lentille optique (2), dans lequel la lentille (2) est à la fois mesurée et traitée dans un dispositif (1) comprenant un dispositif de mesure (10) et un dispositif de traitement (20), le dispositif (1) comprenant un dispositif de chargement (30) pour amener la lentille (2) au dispositif de mesure (10) et/ou au dispositif de traitement (20), la lentille (2) étant transférée à un convoyeur intermédiaire (60) après la mesure au moyen du dispositif de chargement (30),
**caractérisé en ce que**
**en ce que** le dispositif (1) présente un dispositif de déchargement (50) fonctionnant indépendamment du dispositif de chargement (30) pour le prélèvement d'une lentille traitée (2) et
**en ce que** le convoyeur intermédiaire (60) fonctionne indépendamment du dispositif de chargement (30) situé en amont et du dispositif de déchargement (50) situé en aval.

2. Procédé selon la revendication 1, **caractérisé en ce que** le convoyeur intermédiaire (60) reçoit une lentille (2) après la mesure et la transfère à un arbre de serrage supérieur (21) du dispositif de traitement (20).

3. Procédé selon la revendication 1 ou 2, **caractérisé en ce que** deux lentilles (2) sont respectivement traitées simultanément dans le dispositif de traitement (20).

4. Procédé selon l'une des revendications précédentes, **caractérisé en ce que** le dispositif de déchargement (50) est disposé sur un côté du dispositif de traitement (20) opposé au dispositif de chargement (30).

5. Procédé selon l'une des revendications précédentes, **caractérisé en ce que** l'usinage est réalisé dans un espace de travail (23) du dispositif d'usinage (20) et **en ce qu'**une partie de palier (26) du dispositif d'usinage (20) comporte quatre arbres de serrage supérieurs (22) qui peuvent pivoter alternativement dans l'espace de travail (23).

6. Procédé selon l'une des revendications précédentes, **caractérisé en ce que** le convoyeur intermédiaire (6) comprend une pince, en particulier une ventouse (61), pour saisir ou maintenir la lentille (2) sur une face arrière (2B) et, de préférence, un entraînement linéaire ou un chariot (62) pour déplacer linéairement ou faire glisser la pince/ventouse (61).

7. Procédé selon l'une des revendications précédentes, **caractérisé en ce qu'**après une détermination d'un point de blocage (B) et un alignement de la lentille (2) au point de blocage (B), la lentille (2) est amenée au convoyeur intermédiaire (60) placé en amont du dispositif de traitement (2) au moyen du dispositif de chargement (30).

8. Dispositif (1) pour le traitement des bords d'une lentille optique (2), le dispositif (1) comprenant :
un dispositif de mesure (10) pour la lentille (2) ;
un dispositif de traitement (20) pour le traitement, en particulier le traitement des bords, de la lentille (2) ; et
un dispositif de chargement (30) pour amener la lentille (2) au dispositif de mesure (10) et/ou au dispositif de traitement (20),
**caractérisé en ce que**
que le dispositif (1) présente un dispositif de déchargement (50) fonctionnant indépendamment du dispositif de chargement (30) pour le prélèvement d'une lentille (2) traitée,
**en ce que** le dispositif (1) comporte, en plus du dispositif de chargement (30) et du dispositif de déchargement (50), un convoyeur intermédiaire (60) qui fonctionne indépendamment du dispositif de chargement (30) et du dispositif de déchargement (50), et
que le dispositif (1) présente un convoyeur de lentilles (70) pour les lentilles (2) ou les récipients (4) pour l'amenée et l'évacuation des lentilles (2), le dispositif de traitement (20), le dispositif de chargement (30), le dispositif de mesure (10) et le dispositif de déchargement (50) étant disposés du même côté du convoyeur de lentilles (70).

9. Dispositif selon la revendication 8, **caractérisé en ce que** le dispositif de mesure (10) est conçu pour détecter une position de rotation quelconque de la lentille (2) lors de la mesure et **en ce que** le dispositif de traitement (20) est conçu pour traiter la lentille (2) en tenant compte de cette position de rotation.

10. Dispositif selon la revendication 8 ou 9, **caractérisé en ce que** le dispositif de traitement (20) comprend un espace de travail (23) pour le traitement et est conçu à l'extérieur de l'espace de travail (23) pour recevoir des lentilles (2) du convoyeur intermédiaire (60) indépendamment du traitement des lentilles.

11. Dispositif selon la revendication 10, **caractérisé en ce que** le convoyeur intermédiaire (60) - indépendamment du transport de lentilles (2) dans ou hors de l'espace de travail (23) par le dispositif de traitement (20) - peut être chargé avec une lentille (2) par le dispositif de chargement (30).

12. Dispositif selon l'une des revendications 8 à 11, **caractérisé en ce que** le dispositif de traitement (20) comporte quatre arbres de serrage supérieurs (21) qui sont maintenus par une partie de tête ou de palier (26) pivotante ou rotative, la partie de palier (26) pouvant pivoter ou tourner autour d'un axe de pivotement (SB) afin de pouvoir faire pivoter les arbres de serrage supérieurs (21) hors de l'espace de travail (23) et à nouveau à l'intérieur pour changer la lentille (2).

13. Dispositif selon l'une des revendications 8 à 12, **caractérisé en ce que** le convoyeur intermédiaire (60) comporte un entraînement linéaire ou chariot (62) avec une ventouse (61) pour la ou les lentilles (2) - de préférence pour le déplacement notamment linéaire - contre un arbre de serrage supérieur (21) du dispositif de traitement (20).

14. Dispositif selon l'une des revendications 8 à 13, **caractérisé en ce que** le dispositif de déchargement (50) est disposé sur un côté du dispositif de traitement (20) qui est opposé au dispositif de chargement (30) ou y est monté pivotant.

15. Dispositif selon l'une des revendications 8 à 14, **caractérisé en ce que** le convoyeur intermédiaire (60) comporte une pince, notamment une ventouse, pour saisir ou maintenir la lentille (2) sur une face arrière (2B) de la lentille (2).
